# EUROPEAN PATENT APPLICATION

(11) **EP 4 730 927 A1**
(43) Date of publication of application: **22.04.2026**
(21) Application number: 25822309.8
(22) Date of filing: 30.05.2025
(51) Int. Cl.: H05K 3/00, G06F 30/392, G06F 30/398, H05K 13/06, H05K 3/46, G06N 3/08

(54) **METHOD AND SYSTEM FOR AUTOMATICALLY DESIGNING PCB WIRING**

(30) Priority: 14.06.2024 KR 20240077750; 16.01.2025 KR 20250006851
(71) Applicant: LG Management Development Institute Co., Ltd., Seoul 07336 (KR)
(72) Inventor: LEE, Kyung Hyun, Seoul 08831 (KR); LEE, Kang Hoon, Seoul 03504 (KR); PARK, Young Joon, Seoul 07946 (KR); SONG, Hyung Seok, Seoul 07794 (KR); JEONG, Han Seul, Seoul 07576 (KR); YOO, Sung Dong, Seoul 07794 (KR); LIM, Woo Hyung, Seoul 06004 (KR)
(74) Representative: BCKIP Part mbB
(86) International application number: PCT/KR2025/007505
(87) International publication number: WO 2025/258900

(57) **Abstract**

The present invention relates to a PCB wiring automatic design method and system. More specifically, the present invention relates to a printed circuit board (PCB) wiring automatic design method and system, which is capable of performing PCB automatic wiring with a wiring path explored based on a grid as a guide.

## Description

### [Technical Field]

The present invention relates to a PCB wiring automatic design method and system. More specifically, the present invention relates to a printed circuit board (PCB) wiring automatic design method and system, which is capable of performing PCB automatic wiring by using a wiring path explored based on a grid as a guide.

### [Background Art]

The printed circuit board (PCB) is a component essentially included in electronic devices (e.g., a smartphone, a tablet, a PC, etc.), and increases integration and stability by designing wirings that connect electronic elements such as resistors and transistors to each other on an epoxy board. The PCB is generally designed in a single layer to multi-layer structure, and the number of layers may increase according to wiring density.

In this regard, in a conventional PCB design, a hardware engineer sequentially performs circuit diagram configuration, component disposition, and wiring task (or PCB routing), and a final product is generated by going through such processes multiple times. In this case, as a repetitive modification and review process by the engineer is essential, a large amount of time and cost is consumed in PCB design, and a quality deviation may occur depending on the engineer's proficiency. In addition, in case of complex circuit design, as various constraint conditions need to be satisfied along with a multi-layer structure, the design time and cost are greatly increased.

To solve this, recently, research on technologies that can automatically design PCBs is actively being conducted. However, conventional PCB automatic design technologies have limitations in that a wiring connection success rate is low, and complex constraint conditions (e.g., a wiring forbidden zone, wiring (line) width and spacing, wiring angle, multi-layer wiring, etc.) cannot be satisfied.

That is, since the wiring task needs to connect thousands of pins in the circuit in consideration of efficiency and various constraint conditions, PCB wiring design is known as the most time-consuming and complex task.

Accordingly, there still exists a need for a technology capable of efficiently performing PCB automatic wiring while satisfying various constraint conditions required for PCB wiring.

### [Disclosure]

### [Technical Problem]

The present invention is directed to providing a PCB wiring automatic design method and system that is capable of automatically designing a printed circuit board (PCB).

More specifically, the present invention is directed to providing a PCB wiring automatic design method and system that is capable of automatically designing wiring of a PCB, using artificial intelligence.

Further, the present invention is directed to providing a PCB wiring automatic design method and system that is capable of efficiently performing PCB automatic wiring while satisfying various constraint conditions required for PCB wiring, based on a grid.

In addition, the present invention is directed to providing a PCB wiring automatic design method and system that is capable of performing efficient PCB automatic wiring while satisfying all constraint conditions, based on sampling.

More specifically, the present invention is directed to providing a PCB wiring automatic design method and system that is capable of deriving an optimal wiring path satisfying all constraint conditions, using a wiring path explored based on a grid as a guide.

Further, the present invention is directed to providing a PCB wiring automatic design method and system that is capable of generating an optimized wiring path satisfying various constraint conditions.

### [Technical Solution]

To solve the aforementioned objects, there is provided a PCB wiring automatic design method in a PCB wiring automatic design system, according to the present invention. The system may include at least one processor and at least one memory including a computer program code.

The PCB wiring automatic design method may comprise: receiving printed circuit board (PCB) data including a net list and information on a plurality of terminals; updating a cost of the wiring exploration region so that a cost of at least some of the wiring exploration region is increased based on a preset constraint condition; exploring a shortest path for wiring the plurality of terminals according to the net list in the cost-updated wiring exploration region; and performing wiring of the plurality of terminals based on wiring probability according to the shortest path.

In the present invention, in the updating of the cost of the wiring exploration region, the cost of the wiring exploration region may be updated so that a cost of at least some of grid cells among a plurality of grid cells gridization-performed based on a preset criterion is increased based on the preset constraint condition.

Further, in the exploring of the shortest path, the shortest path for wiring the plurality of terminals according to the net list may be explored by exploring grid cells whose cost is minimized in the cost-updated wiring exploration region.

Further, the performing of the wiring of the plurality of terminals may comprise: calculating wiring probability of the plurality of grid cells by using information on grid cells corresponding to the shortest path among the plurality of grid cells; and performing wiring of the plurality of terminals in a continuous coordinate system by using the wiring probability of the plurality of grid cells.

The PCB wiring automatic design method may comprise: receiving printed circuit board (PCB) data including a net list and information on a plurality of terminals; specifying a wiring exploration region for performing wiring of the plurality of terminals based on the net list; performing gridization of the wiring exploration region into a plurality of grid cells based on a preset criterion; updating a cost of the wiring exploration region so that a cost of at least some of the plurality of grid cells is increased, based on a preset constraint condition; exploring, in the cost-updated wiring exploration region, grid cells with minimized costs, to explore a shortest path for wiring the plurality of terminals according to the net list; calculating wiring probabilities of the plurality of grid cells, using information on grid cells corresponding to the shortest path; and performing, in a continuous coordinate system, wiring of the plurality of terminals according to the net list, using the wiring probabilities of the plurality of grid cells.

In an embodiment, the calculating of the wiring probabilities of the grid cells may comprise: calculating wiring probabilities of the grid cells corresponding to the shortest path among the plurality of grid cells to be higher than wiring probabilities of remaining grid cells, so that wiring of the plurality of terminals is performed in the continuous coordinate system centered on the grid cells corresponding to the shortest path.

In an embodiment, the PCB wiring automatic design method may further comprise: converting the wiring exploration region into a heatmap, in which the calculating of the wiring probabilities of the plurality of grid cells may include: assigning a probability value to each of the plurality of grid cells included in the wiring exploration region, and the converting into the heatmap may include: generating the heatmap, using the probability values assigned to each of the plurality of grid cells.

In an embodiment the performing of wiring of the plurality of terminals in the continuous coordinate system may comprise: performing sampling for points to be included in wiring of the plurality of terminals, centered on a region having a high probability value among the wiring exploration region defined by the heatmap.

In an embodiment, the performing of wiring of the plurality of terminals in the continuous coordinate system may comprise: constructing a wiring tree centered on points satisfying the constraint condition among points specified through the sampling; and completing wiring of the plurality of terminals, using the wiring tree.

In an embodiment, the performing of the sampling may comprise: sampling an arbitrary first point positioned in the region having a high probability value on the heatmap, from a point where a first terminal, among terminals grouped into a first net defined by the net list, is positioned.

In an embodiment, the performing of wiring of the plurality of terminals in the continuous coordinate system may comprise: specifying a second point spaced apart from the first point by a preset distance, among regions having a high probability value defined by the heatmap, as a wiring candidate point; determining whether the second point satisfies the constraint condition; and performing different wiring processes depending on whether the second point satisfies the preset constraint condition.

In an embodiment, the different wiring processes may comprise: a first wiring process of allowing the second point to be included in a wiring tree of the first net when the second point satisfies the constraint condition, and sampling a new wiring candidate point spaced apart from the second point by the preset distance.

In an embodiment, the different wiring processes may comprise: a second wiring process of not allowing the second point to be included in the wiring tree of the first net when the second point does not satisfy the constraint condition, and sampling a new wiring candidate point spaced apart from the first point by the preset distance.

In an embodiment, the performing of wiring of the plurality of terminals in the continuous coordinate system may comprise: setting the first terminal as a start point, and setting a second terminal different from the first terminal as a target point, among terminals grouped into the first net; and repeatedly performing at least one of the first wiring process or the second wiring process until the wiring tree continuing from the start point to the target point is constructed, centered on the region having a high probability value defined by the heatmap.

In an embodiment, the performing of wiring of the plurality of terminals in the continuous coordinate system may comprise: switching a direction of a connection path connecting the first point and the second point in at least a portion between the first point and the second point, so that the connection path connecting the first point and the second point satisfies the constraint condition when the second point is included in the wiring tree of the first net.

In an embodiment, the direction of the connection path may be switched from a first direction to a second direction, and an angle between the first direction and the second direction may form 45 degrees.

In an embodiment, the constraint condition may comprise at least one of: a first constraint condition that prevents wiring of the plurality of terminals according to the net list from crossing each other; a second constraint condition related to at least one of a spacing distance between wirings of respective nets included in the net list, or a line width of the respective nets; or a third constraint condition related to a wiring forbidden zone in which wiring is restricted in the wiring exploration region, and the specifying of the grid cell that does not satisfy the constraint condition may include: specifying at least one specific grid cell that does not satisfy at least one of the first constraint condition, the second constraint condition, or the third constraint condition among the plurality of grid cells.

There is provided a PCB wiring automatic design system, according to the present invention. The system may include at least one processor, and at least one memory including a computer program code, in which the memory and the program code may cooperate with the processor to: receive printed circuit board (PCB) data including a net list and information on a plurality of terminals; update a cost of the wiring exploration region so that a cost of at least some of the wiring exploration region is increased based on a preset constraint condition; explore a shortest path for wiring the plurality of terminals according to the net list in the cost-updated wiring exploration region; and perform wiring of the plurality of terminals based on wiring probability according to the shortest path.

More specifically, in the present invention, the memory and the program code may cooperate with the processor to: receive printed circuit board (PCB) data including a net list and information on a plurality of terminals; specify a wiring exploration region for performing wiring of the plurality of terminals based on the net list; perform gridization of the wiring exploration region into a plurality of grid cells based on a preset criterion; update a cost of the wiring exploration region so that a cost of at least some of the plurality of grid cells is increased, based on a preset constraint condition; explore, in the cost-updated wiring exploration region, grid cells with minimized costs, to explore a shortest path for wiring the plurality of terminals according to the net list; calculate wiring probabilities of the plurality of grid cells, using information on grid cells corresponding to the shortest path; and perform, in a continuous coordinate system, wiring of the plurality of terminals according to the net list, using the wiring probabilities of the plurality of grid cells.

There is provided a program stored in a computer-readable recording medium and executed by one or more processes in an electronic device, the program may include instructions to process: receiving printed circuit board (PCB) data including a net list and information on a plurality of terminals; specifying a wiring exploration region for performing wiring of the plurality of terminals based on the net list; performing gridization of the wiring exploration region into a plurality of grid cells based on a preset criterion; updating a cost of the wiring exploration region so that a cost of at least some of the plurality of grid cells is increased, based on a preset constraint condition; exploring, in the cost-updated wiring exploration region, grid cells with minimized costs, to explore a shortest path for wiring the plurality of terminals according to the net list; calculating wiring probabilities of the plurality of grid cells, using information on grid cells corresponding to the shortest path; and performing, in a continuous coordinate system, wiring of the plurality of terminals according to the net list, using the wiring probabilities of the plurality of grid cells.

There is provided a PCB wiring automatic design method in a PCB wiring automatic design system cooperating with an artificial intelligence agent, according to the present invention. The system may include at least one processor and at least one memory including a computer program code, and the PCB wiring automatic design method performed in cooperation with the computer program code, the memory, and the processor, may comprise: receiving PCB wiring target information in the agent through a conversation of a user via a user terminal as a medium; specifying grid cells corresponding to a shortest path that satisfies a preset constraint condition among a plurality of grid cells forming a wiring exploration region, based on the target information; generating a heatmap reflecting wiring probability values for each of the plurality of grid cells, using information on the grid cells corresponding to the shortest path; performing a wiring design in a continuous coordinate system according to the PCB wiring target information, based on probability values defined by the heatmap; and providing, via the agent, a wiring result in the continuous coordinate system to the user terminal.

In an embodiment, the receiving of the PCB wiring target information may comprise: providing, via the agent, a question related to printed circuit board (PCB) data to the user terminal, so that the PCB data including a net list and information on a plurality of terminals is specified; specifying, via the agent, the PCB data based on an answer received from the user terminal; and specifying, via the agent, the target information based on the PCB data.

In an embodiment, the PCB wiring automatic design method may further comprise: generating, via the agent, a task plan based on the PCB wiring target information, wherein the agent, according to the task plan, cooperates with at least one among a data parsing unit, a path exploration unit, a heatmap generation unit, a sampling-based path exploration unit, and a solution derivation unit of the system, to perform wiring according to the PCB wiring target information.

In an embodiment, the agent may comprise: a main agent configured to generate the task plan; and a plurality of sub-agents, configured to cooperate with the main agent, respectively interoperating with one among the data parsing unit, the path exploration unit, the heatmap generation unit, the sampling-based path exploration unit, and the solution derivation unit.

In an embodiment, the main agent, according to the task plan, may deliver a task command to at least one of the plurality of sub-agents, and the at least one sub-agent, according to the task command, may perform a wiring design according to the PCB wiring target information.

There is provided a PCB wiring automatic design method in a PCB wiring automatic design system, according to the present invention. The system may include at least one processor and at least one memory including a computer program code. The PCB wiring automatic design method may comprise: receiving printed circuit board (PCB) data including a net list and information on a plurality of terminals; specifying a wiring exploration region for performing wiring of the plurality of terminals based on the net list; performing gridization of the wiring exploration region into a plurality of grid cells based on a preset criterion; disposing the plurality of terminals respectively in at least some of the plurality of grid cells, based on the PCB data; exploring a shortest path for wiring the plurality of terminals according to the net list, in a state where the plurality of terminals are disposed in the wiring exploration region; based on a result of wiring the plurality of terminals according to the shortest path, specifying a grid cell that does not satisfy a preset constraint condition, among the plurality of grid cells; updating a cost of the wiring exploration region such that a cost of a specific grid cell that does not satisfy the constraint condition is increased; and re-exploring a shortest path for wiring the plurality of terminals according to the net list in the cost-updated wiring exploration region.

In an embodiment, the plurality of terminals may respectively correspond to electrical contact points where wiring starts or ends on a PCB defined by the PCB data, and the net list may include net group information in which terminals that need to be electrically connected among the plurality of terminals are grouped into respective nets.

In an embodiment, in the exploring of the shortest path, a first shortest path for wiring terminals grouped into a first net defined by the net list, at a minimum cost, and a second shortest path for wiring terminals grouped into a second net different from the first net and defined by the net list, at minimum cost, may be explored.

In an embodiment, in the exploring of the shortest path, the first shortest path and second shortest path having a lowest cost may be explored independently of the constraint condition, in a state where the same cost is given to each of the plurality of grid cells in the wiring exploration region.

In an embodiment, the constraint condition may include a first constraint condition that prevents wiring of the plurality of terminals according to the net list from crossing each other.

In an embodiment, in the specifying of the grid cell that does not satisfy the constraint condition, among the cells occupied by the first shortest path and the cells occupied by the second shortest path, the cells that overlap each other may be specified as a specific grid cell that does not satisfy the constraint condition.

In an embodiment, in the updating of the cost, based on the first constraint condition, during a shortest path re-exploration process of the first net and the second net, the cost of the specific grid cell, which are the overlapping cell, may be set higher than the cost of other grid cells among the plurality of grid cells, so that the specific grid cells are not included in the re-explored shortest path.

In an embodiment, in the re-exploring of the shortest path, the first shortest path of the first net and the second shortest path of the second net may be configured to be re-explored so as to avoid the specific grid cell with increased cost, and the re-explored first shortest path and the re-explored second shortest path may not include the specific grid cell.

In an embodiment, the constraint condition may further comprise a second constraint condition related to at least one of a spacing distance between wirings of each net included in the net list, or a line width of each of the nets.

In an embodiment, the specifying of the grid cell that does not satisfy the constraint condition may further comprise: specifying a second specific grid cell that do not satisfy the second constraint condition in a state where a cost of a first specific grid cell specified according to the first constraint condition has been updated, and in the updating of the cost, a cost of the second specific grid cell may be further increased in a state where the cost of the first specific grid cell has been increased.

In an embodiment, in the specifying of the grid cell that does not satisfy the constraint condition, after specifying one of the re-explored first shortest path and the re-explored second shortest path as a final wiring, a grid cell neighboring the shortest path specified as the final wiring among the plurality of grid cells may be specified as the second specific grid cell that does not satisfy the second constraint condition.

In an embodiment, in the re-exploring of the shortest path, among the re-explored first shortest path and the re-explored second shortest path, a shortest path other than the shortest path specified as the final wiring may be re-explored based on the increased costs of the first specific grid cell and the second specific grid cell.

In an embodiment, the constraint condition may further comprise a third constraint condition related to a wiring forbidden zone in which wiring is restricted in the wiring exploration region.

In an embodiment, the constraint condition may comprise at least one of: a first constraint condition that prevents wiring of the plurality of terminals according to the net list from crossing each other; a second constraint condition related to at least one of a spacing distance between wirings of respective nets included in the net list, or a line width of the respective nets; or a third constraint condition related to a wiring forbidden zone in which wiring is restricted in the wiring exploration region, and the specifying of the grid cell that does not satisfy the constraint condition may include: specifying at least one specific grid cell that does not satisfy at least one among the first constraint condition, the second constraint condition, and the third constraint condition among the plurality of grid cells.

In an embodiment, in the specifying of the grid cell that does not satisfy the constraint condition, a grid cell according to one of constraint conditions, among the first constraint condition, the second constraint condition, and the third constraint condition, may be preferentially specified according to a preset priority, and grid cells according to remaining constraint conditions may be sequentially specified.

In an embodiment, when the PCB defined by the PCB data is composed of a plurality of layers, the wiring exploration region may be formed of a plurality of wiring exploration regions, and the PCB data may comprise position information on which of the plurality of wiring exploration regions each net is to be positioned. In the disposing of each of the plurality of terminals, a cost of at least one of the plurality of wiring exploration regions may be increased based on the position information.

In an embodiment, in the increasing of the cost of at least one of the plurality of wiring exploration regions, when a specific net defined by the net list is to be positioned in a first wiring exploration region among the plurality of wiring exploration regions, costs of grid cells included in remaining wiring exploration regions may be all increased such that the specific net is not disposed in the remaining wiring exploration regions, excluding the first wiring exploration region among the plurality of wiring exploration regions.

In an embodiment, in the disposing of each of the plurality of terminals, the plurality of terminals may be respectively disposed in at least some of the plurality of grid cells, based on the PCB data, in a state where the costs of the remaining wiring exploration regions are increased.

There is provided a sampling-based wiring system, according to the present invention. The system may include at least one processor and at least one memory including a computer program code, and the memory and the program code may cooperate with the processor to: receive printed circuit board (PCB) data including a net list and information on a plurality of terminals; specify a wiring exploration region for performing wiring for the plurality of terminals based on the net list; perform gridization of the wiring exploration region into a plurality of grid cells based on a preset criterion; dispose the plurality of terminals respectively in at least some of the plurality of grid cells based on the PCB data; explore a shortest path for wiring the plurality of terminals according to the net list with the plurality of terminals disposed in the wiring exploration region; based on a result of wiring the plurality of terminals corresponding to the shortest path, specify a grid cell that does not satisfy a preset constraint condition among the plurality of grid cells; update a cost of the wiring exploration region such that a cost of a specific grid cell that does not satisfy the constraint condition is increased; and re-explore a shortest path for wiring the plurality of terminals according to the net list in the cost-updated wiring exploration region.

There is provided a program stored in a computer-readable recording medium and executed by one or more processes in an electronic device, according to the present invention. The program may include instructions to perform: receiving printed circuit board (PCB) data including a net list and information on a plurality of terminals; updating a cost of the wiring exploration region so that a cost of at least some of the wiring exploration region is increased based on a preset constraint condition; exploring a shortest path for wiring the plurality of terminals according to the net list in the cost-updated wiring exploration region; and performing wiring of the plurality of terminals based on wiring probability according to the shortest path.

There is provided a program stored in a computer-readable recording medium and executed by one or more processes in an electronic device, according to the present invention. The program may include instructions to perform: receiving printed circuit board (PCB) data including a net list and information on a plurality of terminals; specifying a wiring exploration region for performing wiring of the plurality of terminals based on the net list; performing gridization of the wiring exploration region into a plurality of grid cells based on a preset criterion; disposing the plurality of terminals respectively in at least some of the plurality of grid cells, based on the PCB data; exploring a shortest path for wiring the plurality of terminals according to the net list, in a state where the plurality of terminals are disposed in the wiring exploration region; based on a result of wiring the plurality of terminals according to the shortest path, specifying a grid cell that does not satisfy a preset constraint condition, among the plurality of grid cells; updating a cost of the wiring exploration region such that a cost of a specific grid cell that does not satisfy the constraint condition is increased; and re-exploring a shortest path for wiring the plurality of terminals according to the net list in the cost-updated wiring exploration region.

Further, in a PCB wiring automatic design method in a PCB wiring automatic design system cooperating with an artificial intelligence agent according to the present invention, the system may include at least one processor and at least one memory including computer program code, and may cooperate with the computer program code, the memory, and the processor to perform the PCB wiring automatic design method. The PCB wiring automatic design method may comprise: receiving, via the agent, PCB wiring target information through a conversation of a user via a user terminal as a medium; specifying grid cells corresponding to a shortest path that satisfies a preset constraint condition among a plurality of grid cells forming a wiring exploration region, based on the target information; performing a wiring design according to the PCB wiring target information, based on probability information calculated using information on the grid cells corresponding to the shortest path; and providing, via the agent, the wiring result to the user terminal.

The receiving of the PCB wiring target information, of the PCB wiring automatic design method, may comprise: providing, via the agent, a question related to printed circuit board (PCB) data to the user terminal, so that the PCB data including a net list and information on a plurality of terminals is specified; specifying, via the agent, the PCB data based on an answer received from the user terminal; and specifying, via the agent, the target information based on the PCB data.

The PCB wiring automatic design method may further comprise: generating, via the agent, a task plan based on the PCB wiring target information, in which the agent, according to the task plan, cooperates with at least one of a data parsing unit, a path exploration unit, a heatmap generation unit, a sampling-based path exploration unit, or a solution derivation unit of the system, to perform wiring according to the PCB wiring target information.

The agent may comprise: a main agent configured to generate the task plan; and a plurality of sub-agents, configured to cooperate with the main agent, respectively interoperating with one among the data parsing unit, the path exploration unit, the heatmap generation unit, the sampling-based path exploration unit, and the solution derivation unit, and the main agent, according to the task plan, may deliver a task command to at least one of the plurality of sub-agents, and the at least one sub-agent, according to the task command, may perform a wiring design according to the PCB wiring target information.

### [Advantageous Effects]

As described above, according to the PCB wiring automatic design method and system according to the present invention, by automating the PCB design process using artificial intelligence, it may be possible to minimize the time consumed in the PCB design process, and to enable reduction of human resources and costs incurred in the PCB design process.

In addition, according to the PCB wiring automatic design method and system according to the present invention, by exploring the wiring path of the PCB using artificial intelligence, an efficient wiring path satisfying various constraint conditions can be derived. Through this, in the present invention, the efficiency, accuracy, and quality of PCB wiring design can be improved simultaneously, and a user can reduce the time and cost incurred to design PCB wiring.

Further, according to the PCB wiring automatic design method and system according to the present invention, by performing PCB automatic wiring satisfying various constraint conditions required for PCB wiring, using artificial intelligence, the productivity and quality of the entire PCB wiring design process may be improved. That is, the present invention may be flexibly applied and used even in a complex PCB wiring design environment.

In addition, according to the PCB wiring automatic design method and system according to the present invention, by efficiently exploring the PCB wiring path based on a grid, an optimized wiring path satisfying complex constraint condition can be derived while minimizing wiring conflict (or congestion, interference, etc.).

Further, according to the PCB wiring automatic design method and system according to the present invention, by using the result explored based on a grid as a guide, an optimal path accurately satisfying various constraint conditions can be explored. Through this, a user can rid himself of repetitive wiring path adjustment tasks and maximize the efficiency in the design process.

In addition, according to the PCB wiring automatic design method and system according to the present invention, by rapidly exploring a shortest path based on a grid and precisely correcting the shortest path explored based on the grid, a complex PCB wiring problem can be solved, and an optimal solution (i.e., an optimal wiring path) satisfying all constraint conditions can be derived.

As such, in the present invention, in order to find an optimal path from a start point (terminal) to a target point (terminal), grid-based exploration is performed, and sampling is performed using the wiring path explored based on the grid as a guide, so that an optimized wiring path can be derived. That is, in the present invention, through a grid and sampling process, processes such as wiring optimization, path exploration, and reflection of constraint conditions may be efficiently and systematically performed. Through this, the present invention may be applied to the design of various electronic devices, and may be efficiently used in the overall industrial field, and can reduce the cost required in the PCB wiring design process, and minimize the design time and human resources.

### [Description of Drawings]

FIG. 1 is a conceptual diagram for explaining a wiring system according to the present invention.
FIG. 2 is a conceptual diagram for explaining components included in a PCB and constraint conditions required for PCB design.
FIG. 3 is a conceptual diagram illustrating an embodiment of a multi-layer PCB structure.
FIGS. 4A and 4B are flowcharts for explaining an overall process of the present invention.
FIG. 5 is a flowchart for explaining a grid-based wiring method according to the present invention.
FIGS. 6, 7, 8, 9, 10, 11, and 12 are conceptual diagrams for explaining the grid-based wiring method according to the present invention.
FIG. 13 is a flowchart for explaining a sampling-based wiring method according to the present invention.
FIG. 14 is a conceptual diagram for explaining an embodiment of a sampling-based path exploration algorithm.
FIGS. 15, 16, 17, 18, 19, 20, 21, 22, and 23 are conceptual diagrams for explaining the sampling-based wiring method according to the present invention.
FIGS. 24 and 25 are conceptual diagrams for explaining an agent according to the present invention.

### [Mode for Disclosure]

Hereinafter, exemplary embodiments disclosed in the present specification will be described in detail with reference to the accompanying drawings. The same or similar constituent elements are assigned with the same reference numerals regardless of reference numerals, and the repetitive description thereof will be omitted. The suffixes "module", "unit", "part", and "portion" used to describe constituent elements in the following description are used together or interchangeably in order to facilitate the description, but the suffixes themselves do not have distinguishable meanings or functions. In addition, in the description of the exemplary embodiment disclosed in the present specification, the specific descriptions of publicly known related technologies will be omitted when it is determined that the specific descriptions may obscure the subject matter of the exemplary embodiment disclosed in the present specification. In addition, it should be interpreted that the accompanying drawings are provided only to allow those skilled in the art to easily understand the embodiments disclosed in the present specification, and the technical teachings disclosed in the present specification is not limited by the accompanying drawings, and includes all alterations, equivalents, and alternatives that are included in the teachings and the technical scope of the present invention.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element exists between the constituent elements.

Singular expressions include plural expressions unless clearly described as different meanings in the context.

In the present application, it should be understood that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

The present invention relates to a sampling-based wiring method and system (or a wiring method and system, or a PCB automatic design method and system). A sampling-based wiring system (or a PCB automatic design system, or a PCB wiring automatic design system) according to the present invention may be a system that automatically designs a printed circuit board (PCB) by using artificial intelligence (or an artificial intelligence algorithm) or generative artificial intelligence (generative AI).

In particular, the sampling-based wiring system according to the present invention is a system that may perform efficient PCB automatic wiring while satisfying all constraint conditions (constraints) based on sampling, and the present invention aims to explore and/or derive (or generate) an optimal wiring path (i.e., a solution) accurately satisfying various constraint conditions. In the present invention, performing wiring may be understood as performing wiring design.

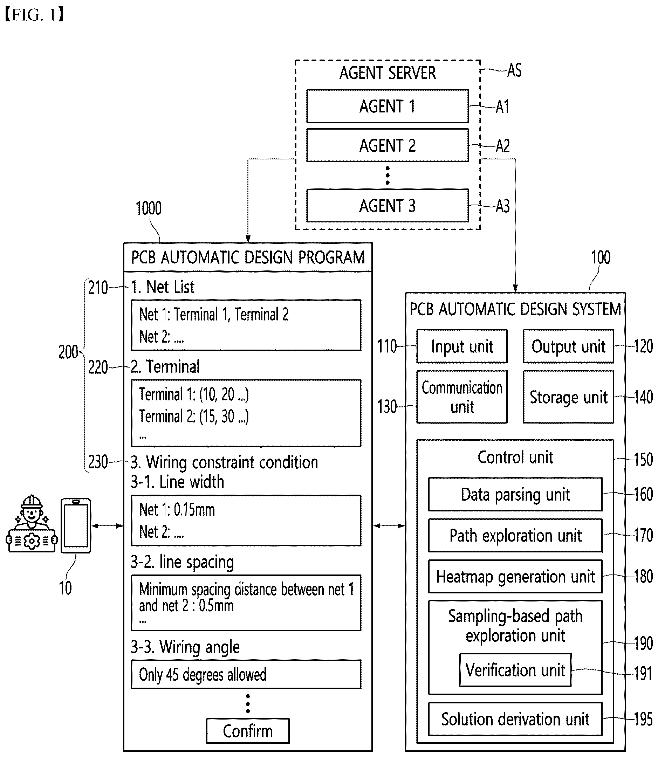

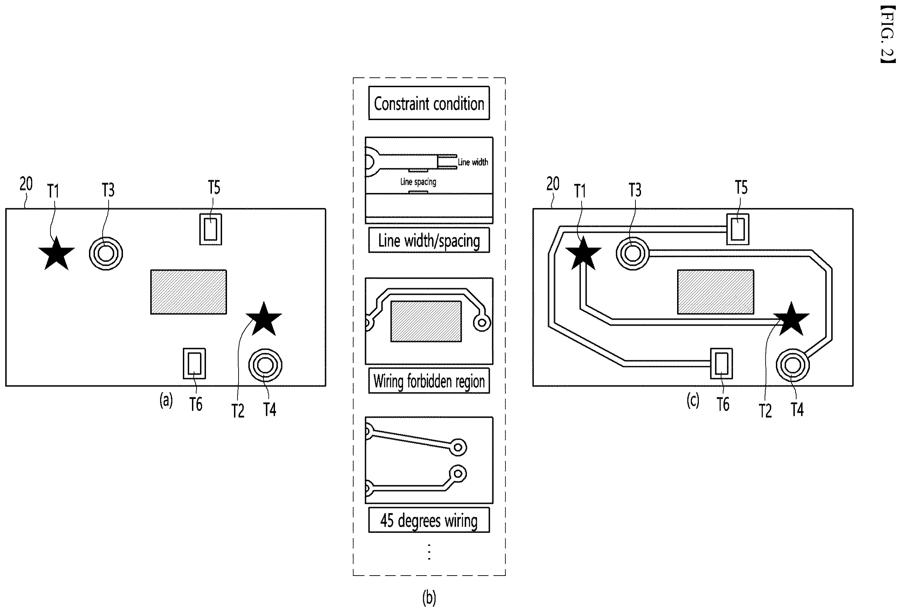

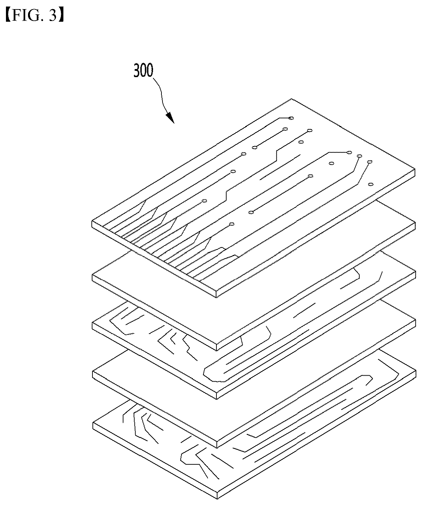

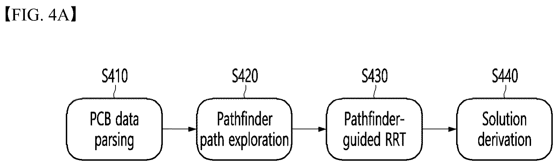

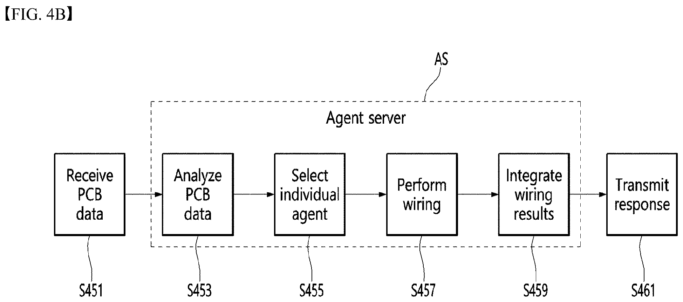

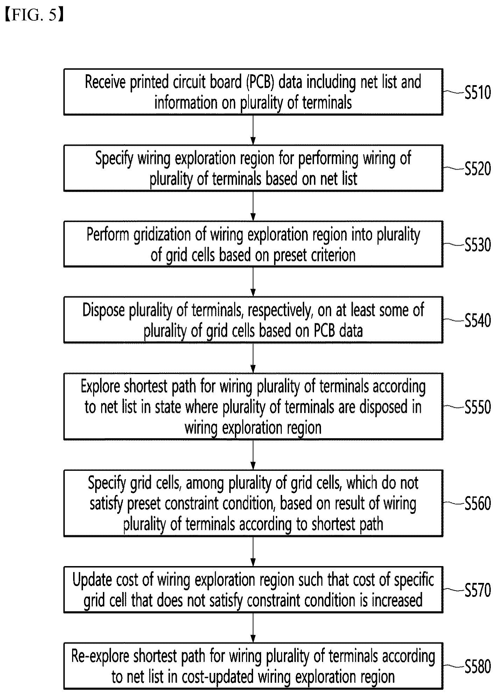

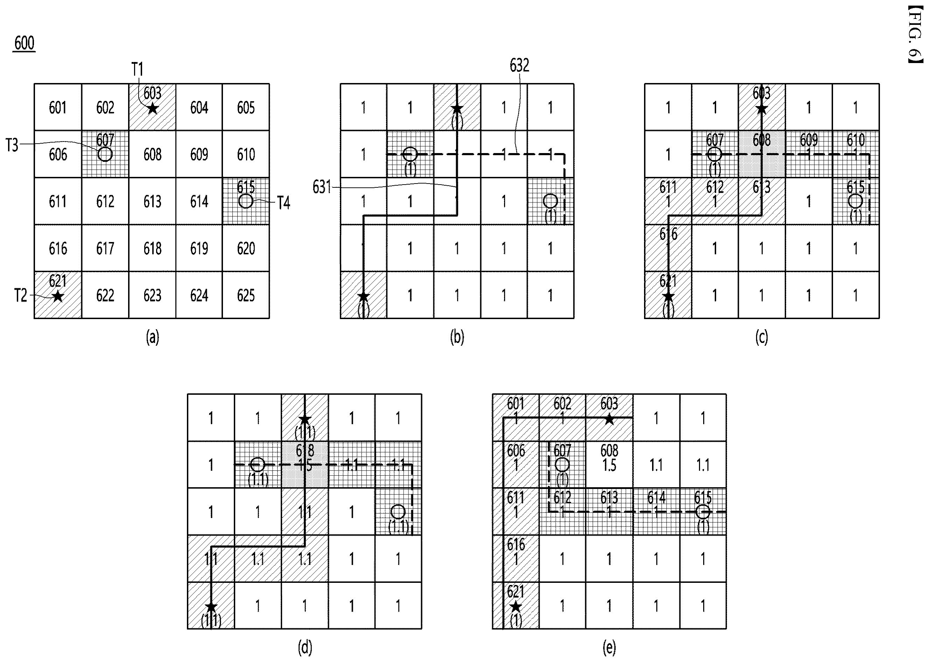

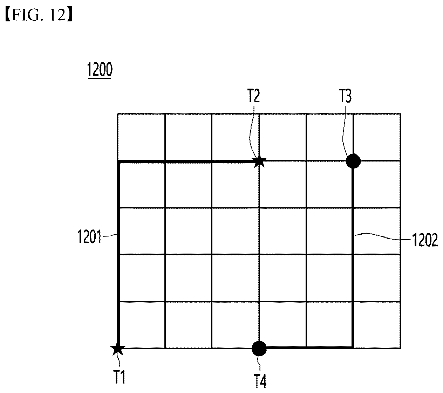

Hereinafter, the present invention will be described in more detail with reference to the accompanying drawings. FIG. 1 is a conceptual diagram for explaining a wiring system according to the present invention. FIG. 2 is a conceptual diagram for explaining components included in a PCB and constraint conditions required for PCB design, FIG. 3 is a conceptual diagram illustrating an embodiment of a multi-layer PCB structure, FIGS. 4A and 4B are flowcharts for explaining an overall process of the present invention, FIG. 5 is a flowchart for explaining a grid-based wiring method according to the present invention, and FIGS. 6, 7, 8, 9, 10, 11, and 12 are conceptual diagrams for explaining the grid-based wiring method according to the present invention.

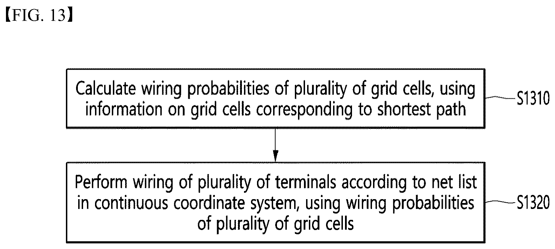

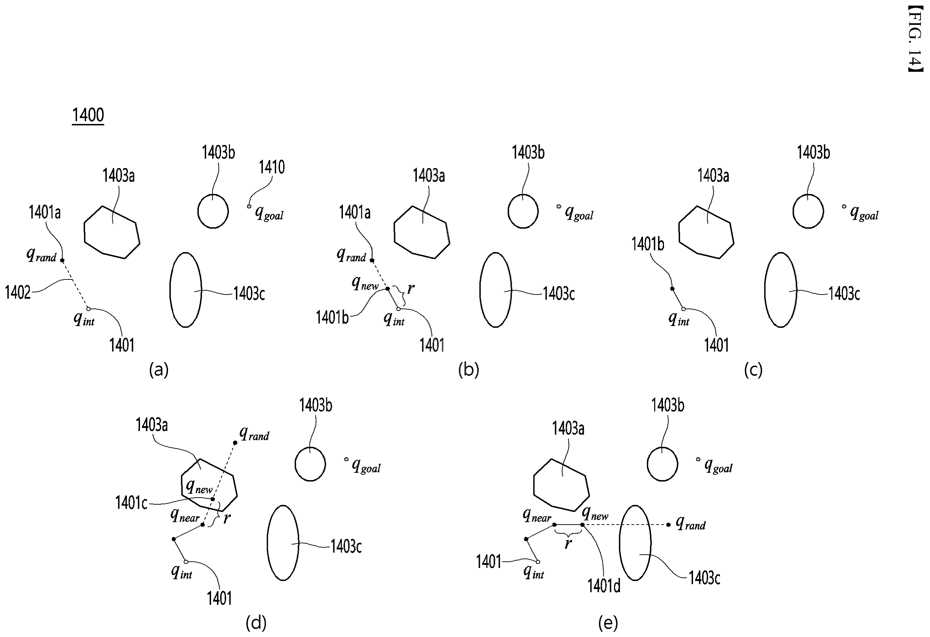

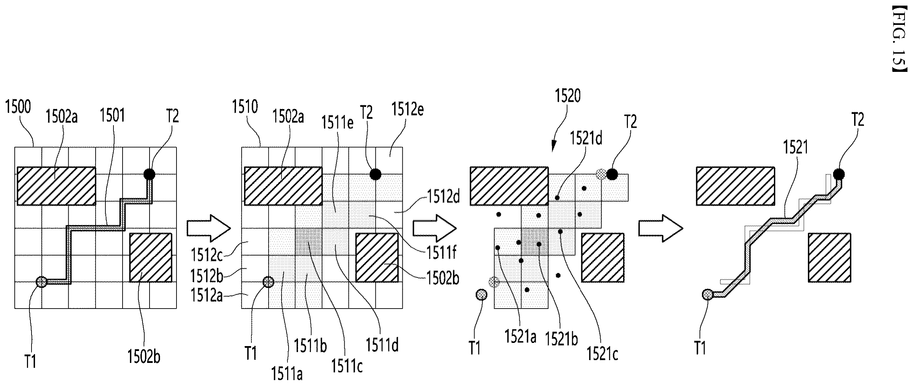

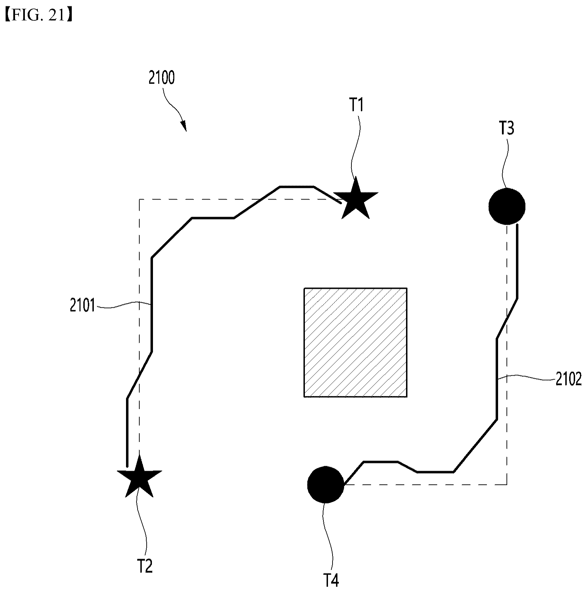

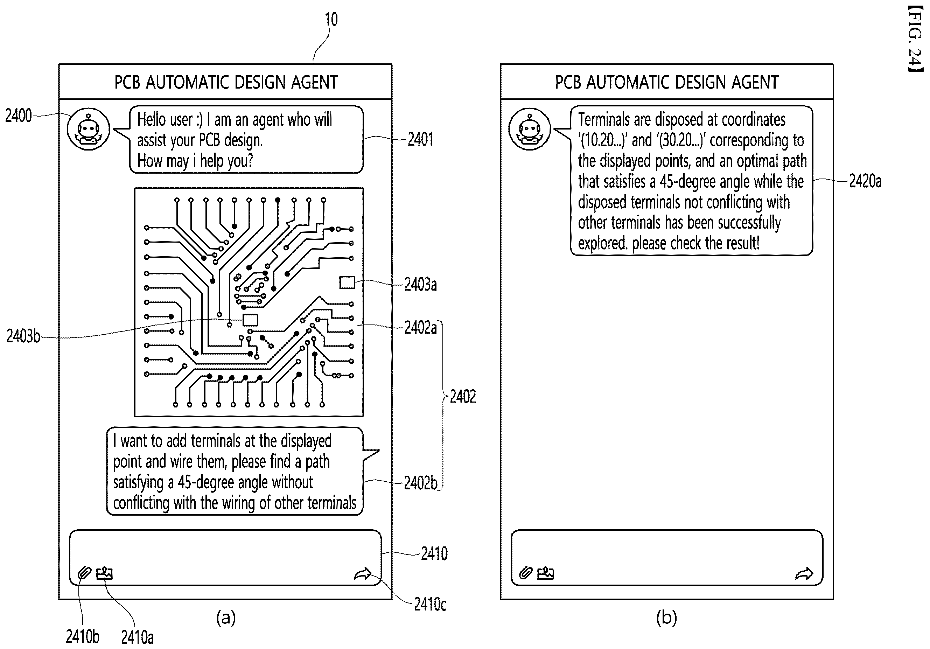

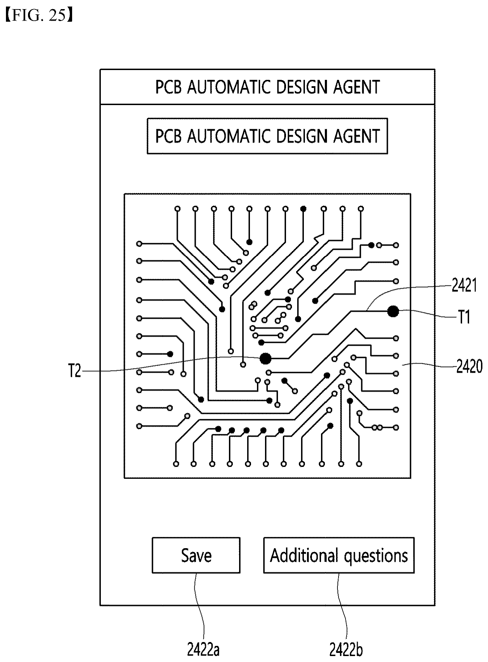

FIG. 13 is a flowchart for explaining a sampling-based wiring method according to the present invention, FIG. 14 is a conceptual diagram for explaining an embodiment of a sampling-based path exploration algorithm, and FIGS. 15, 16, 17, 18, 19, 20, 21, 22, and 23 are conceptual diagrams for explaining the sampling-based wiring method according to the present invention. Further, FIGS. 24 and 25 are conceptual diagrams for explaining an agent according to the present invention.

Meanwhile, as illustrated in FIG. 1, a wiring system 100 (or a sampling-based wiring system 100) according to the present invention may include at least one of an input unit 110, an output unit 120, a communication unit 130, a storage unit 140, or a control unit 150.

The system 100 according to the present invention may include at least one processor and at least one memory including a computer program code. In this case, the storage unit 140 above may serve as the memory. In the present invention, the memory and the program code may cooperate with the processor to perform a series of processes described below.

Although not illustrated, the wiring system 100 according to the present invention may include one or more processors, and these processors may include one or more general-purpose processors and/or one or more specialized processors (for example, a digital signal processor, a tensor processing unit (TPU), a graphics processing unit (GPU), a neural network processing unit (NPU), an application-specific integrated circuit (ASIC), etc.). The one or more processors may be configured to execute instructions, computer-readable directives, and/or other instructions described in the present specification, which are stored (or included) in the storage unit 140. The sampling-based wiring system and method according to the present invention may perform data processing, as described below, with the cooperation of a memory and at least one processor. The processor may perform a series of operations and data processing using data and information stored in the memory. In this case, the memory may be a configuration of the storage unit 140.

Meanwhile, the input unit 110 may serve as a means for data input, and may be configured in various types. For example, the input unit 110 may be configured to receive a user input. The input unit 110 may be configured to receive user input from the user terminal 10. Here, the phrase "receives input" may mean receiving an input signal (or selection signal) corresponding to user input, based on input being made by a user through an input unit configuration provided in the user terminal 10.

In addition, in the present invention, the input unit 110 does not necessarily refer to a hardware means, but may be understood as a channel for receiving input from a user.

The input unit 110 may also be referred to as a user interface module. The input unit 110 may include a touch screen, computer mouse, keyboard, keypad, touch pad, trackball, joystick, voice recognition module, or other similar devices. However, in the present invention, the types of the input unit 110 are not limited.

Here, the user input may include a document, text, image (or video), voice, and the like. In this case, the wiring system 100 may further include a module for converting voice into text.

Next, the output unit 120 may output information through an output unit configuration (e.g., a display unit, touch screen, speaker, etc.) provided in a user terminal 10 interoperating with the wiring system 100 according to the present invention. For example, the output unit 120 may output a page (or service page, 1000) linked with the wiring system 100 according to the present invention to a display unit of the user terminal 10. In addition, the output unit 120 does not necessarily refer to a hardware means, but may be understood as a channel for outputting results to a user.

Next, the communication unit 130 may be connected to the user terminal 10, a server (e.g., a central server, an external server, etc.), a device, and at least one network, etc. via a wireless or wired network, and may be configured to transmit or receive overall data and information required for the operation of the wiring system 100 according to the present invention.

Here, the user terminal 10 may include a cell phone, a smart phone, a notebook computer, a portable computer (laptop computer), a slate PC, a tablet PC, an ultrabook, a desktop computer, a digital broadcast terminal, a personal digital assistant (PDA), a portable multimedia player (PMP), a navigation device, a wearable device (e.g., a watch-type device (smartwatch), a glass-type device (smart glass), and a head mounted display (HMD)), and the like.

Further, the communication unit 130 may support various communication methods depending on the communication standards of devices to be communicated with.

For example, the communication unit 130 may be configured to communicate with a communication target using at least one of wireless LAN (WLAN), wireless-fidelity (Wi-Fi), wireless-fidelity (Wi-Fi) direct, digital living network alliance (DLNA), wireless broadband (WiBro), world interoperability for microwave access (WiMAX), high speed downlink packet access (HSDPA), high speed uplink packet access (HSUPA), long term evolution (LTE), long term evolution-advanced (LTE-A), fifth generation mobile telecommunication (5G), Bluetooth^{™} radio frequency identification (RFID), infrared communication (infrared data association (IrDA)), ultra-wideband (UWB), ZigBee, near field communication (NFC), Wi-Fi direct, or wireless universal serial bus (wireless USB) technologies.

Next, the storage unit 140 (or a memory), may perform a role of storing various data related to the present invention, and may include one or more non-transitory computer-readable storage media that may be read and/or accessed by at least one of the one or more processors.

The one or more computer-readable storage media may include volatile and/or nonvolatile storage constituent elements, such as optical, magnetic, organic, or other memory or disk storage devices. In some examples, the storage unit 140 may be implemented using a single physical device (e.g., one optical, magnetic, organic, or other memory or disk storage device), whereas in other examples, the storage unit 140 may be implemented using two or more physical devices.

The storage unit 140 may include computer-readable directives and additional data. The storage unit 140 may include a storage necessary to perform at least part of the methods, scenarios, and technologies described in this specification and/or at least part of the functions of the devices and networks.

Further, at least a part of the storage unit 140 may be a cloud storage or a cloud server. At least a part of data corresponding to user input received from the input unit 110 and training data may be stored in the storage unit 140.

That is, the storage unit 140 is sufficient to be a space where information necessary for the operation of the wiring system 100 according to the present invention is stored, and it may be understood that there are no constraints on physical space.

Further, the storage unit 140 may store a computer program including computer program instructions. Further, the storage unit 140 may store a computer program including computer program instructions that, when loaded to a processor of the system 100, control operation of the system 100 or operation of the control unit. Next, the control unit 150 may perform a role of controlling overall operation of the wiring system 100 related to the present invention. The control unit 150 may process signals, data, information, and the like that are input or output through the constituent elements of the wiring system 100 described above, or perform a series of data processing to provide or process appropriate information and functions to the user. The control unit 150 may be physically implemented by the processor described above.

The control unit 150 may include at least one of a data parsing unit 160, a path exploration unit 170, a heatmap generation unit 180, a sampling-based path exploration unit 190, or a solution derivation unit 195, in order to derive an optimal solution (i.e., an optimal wiring path) that satisfies various constraint conditions required for PCB wiring, based on PCB data 200 received (or input) from a user terminal 10 through a service page (or a PCB automatic design program 1000), or based on the PCB data stored in a storage unit 140.

In this case, the control unit 150 may input (or transmit) the PCB data 200, which includes information on at least one of a net list (e.g., "Net list", 210), terminal information (e.g., "Terminal", 220), and various wiring constraint conditions 230, to the data parsing unit 160.

The data parsing unit 160 may be configured to perform various processes (or data processing) such as string parsing, language parsing, Hyper Text Markup Language (HTML) and eXtensible Markup Language (XML) parsing, syntax analyzing (Parsing), and data format parsing.

In an embodiment, string parsing is a process of extracting specific data from a string or converting it into a desired format, and the data parsing unit 160 may parse a Comma-Separated Values (CSV) file to extract table data, or convert a JavaScript Object Notation (JSON) string into an object.

In another embodiment, language parsing may include a process of interpreting source code of a programming language or a markup language, identifying syntax errors, and converting it into executable code. In addition, syntax analyzing may be a process of analyzing a text document in natural language processing to understand sentence structure, vocabulary, grammar, semantics, and the like.

In another embodiment, data format parsing may be a process of analyzing a specific data format (e.g., XML, JSON, Yet Another Markup Language (YAML), etc.) to extract and process data, and such formats may be used for data exchange and storage, and may play an important role in sharing data between applications.

Such data parsing unit 160 may analyze (or interpret) the PCB data (or PCB design data 200), and may extract at least one of the net list 210, terminal information 220, and wiring constraint condition 230 included in the PCB data 200, based on the analysis result. For example, the data parsing unit 160 may analyze the PCB data 200, and extract at least one of net group information, coordinate information (or position information, coordinate values, etc.) for each of a plurality of terminals, or wiring constraint conditions.

Further, the data parsing unit 160 may convert information (or data) extracted from the PCB data 200 into a form (or data structure) understandable by an artificial intelligence model (or algorithm).

In an embodiment, the data parsing unit 160 may convert coordinate information (e.g., Cartesian coordinates) for a plurality of terminals included in the PCB data 200 into grid(lattice-based) coordinate information.

In another embodiment, the data parsing unit 160 may parse data from PCB design data (e.g., Gerber, ODB, CAD files, etc.), and may input (or transmit) the parsed data to at least one of the control unit 150, the path exploration unit 170, or the generative model (not illustrated).

Hereinafter, the information included in the PCB data 200 and constraint conditions required for PCB design will be described in more detail.

First, as illustrated in (a) of FIG. 2, a plurality of terminals T1, T2, T3, T4, T5, and T6 may mean electrical connection points (pins or nodes of electronic components) at which wiring is to actually be performed. Here, the term "electrical connection point" may mean an electrical contact point (start point or end point) at which wiring starts or ends, and a terminal may mean an electrical contact point at which wiring starts or ends.

Such terminals are points at which electronic components, such as resistors or transistors, are mounted on a PCB 20, and a terminal may be expressed as a component pin or an electrical node on the PCB 20. For example, a specific pin of an integrated circuit (IC) chip, a contact point of a connector, an end point of a PCB (or circuit) trace, or the like may correspond to a terminal.

That is, the plurality of terminals T1, T2, T3, T4, T5, and T6 may respectively correspond to electrical contact points at which wiring starts or ends on the PCB 20 defined by the PCB data 200. In this case, the PCB data 200 may include coordinate information for each of the plurality of terminals T1, T2, T3, T4, T5, and T6 (e.g., "Terminal 1: (10, 20 ...)", "Terminal 2: (15, 30 ...)", etc.). In this case, when the PCB to be designed has a multi-layer structure, the PCB data 200 may further include information on the layer on which each terminal is positioned.

Here, an electrical contact point may refer to a physical or logical contact point (point or node) at which electrical signals are delivered or connections are made. This may operate as a connection point for delivering current, signals, or data in electronic devices and circuit design.

A physical contact point may correspond to a physical connection point at which current actually flows or electrical signals are delivered. For example, the physical contact point may include a point at which pins and sockets of a connector touch, a portion where contact occurs in a relay or switch, a soldered pin on a PCB, or the like.

In addition, a logical contact point (node) may correspond to a point that is not physically connected but is regarded as being electrically connected. For example, the logical contact point may include a node connected by a net in circuit design, a terminal on a path through which an electrical signal moves from one node to another node, or the like.

Such electrical contact points (nodes) may perform a role of forming a path along which electrical signals move to other components or circuits in the circuit. For example, the electrical contact points may i) allow current to be delivered to an electronic device through a contact point, ii) allow power to be supplied at a contact point of battery terminals (anode and cathode), iii) provide a physical connection between electronic components so that signals or power may flow, or iv) perform a role of connecting a pin of an IC chip to a trace in PCB design.

Next, a net ("Net") may mean a path that needs to be essentially connected to deliver signals or supply power in a circuit, and may refer to a group of terminals (electrical contact points) that need to be electrically connected or exchange signals with each other. For example, when a first terminal T1 and a second terminal T2 are to be connected by wiring, the first terminal T1 and the second terminal T2 may be understood to belong to the same net (e.g., Net 1).

The net list 210 may include a list (or set) of terminals that are to be electrically connected. More specifically, the net list 210 may include information defining connection relationships among terminals that are to be electrically connected. Terminals defined in the net list 210 may be key nodes that are to be electrically connected on the PCB 20. For example, a user (or engineer) may perform grouping of terminals T1 and T2, which are to be electrically connected, among the plurality of terminals T1, T2, T3, T4, T5, and T6, into a single net (e.g., "Net 1"), and may input net group information (e.g., "Net 1: Terminal 1, Terminal 2") into the net list 210. In this case, the "Net 1: Terminal 1, Terminal 2" input into the net list 210 may be interpreted to mean that the first terminal T1 is to be connected to the second terminal T2.

Accordingly, the net list 210 included in the PCB data 200 may include net group information in which terminals, among the plurality of terminals T1, T2, T3, T4, T5, and T6, that are to be electrically connected are grouped into respective nets.

For example, in the net list 210, a first net group information (e.g., "Net 1: Terminal 1, Terminal 2") may be included, in which the first terminal T1 and the second terminal T2 are included in a group called a first net (e.g., Net 1), and it is defined (or represented) that the first terminal T1 and the second terminal T2 are to be electrically connected.

In another example, a second net group information (e.g., "Net 2: Terminal 3, Terminal 4") may be included in the net list 210, in which a third terminal T3 and a fourth terminal T4 are included in a group called a second net (e.g., Net 2), and it is defined that the third terminal T3 and the fourth terminal T4 are to be electrically connected.

That is, the net group information included in the net list 210 may be understood as information including which terminals are grouped into a single net, and what connections are to be made among the terminals included in each net.

Therefore, according to the net group information included in the net list 210, terminals belonging to (or included in) the same net (e.g., Net 1) need to be connected to each other, and terminals belonging to different nets (e.g., Net 1 and Net 2) need not to be connected to each other.

Next, wiring constraint conditions 230 are conditions that need to be followed in PCB wiring, and may include various conditions that are essential to ensure performance and reliability of the circuit. For example, as illustrated in (b) of FIG. 2, the wiring constraint conditions may include at least one of i) a line width, ii) a line spacing, iii) a wiring forbidden region (or zone), iv) 45-degree wiring, or v) a wiring length constraint. In the present invention, such constraint conditions may also be referred to as a "preset constraint condition(s)" in the sampling-based system 100.

The line width may mean a thickness (or width) of a line. For example, it is necessary to maintain a consistent line width in order on a PCB to allow current to flow safely.

The line spacing may mean a minimum distance to be maintained between different nets (wirings). For example, when the spacing between wirings is too narrow, signal interference or short circuiting may occur. Therefore, it is necessary to maintain a safe distance (or minimum distance) between different wirings to prevent such issues. In the present invention, the 'minimum distance to be maintained between different nets (wirings)' may also be referred to as a 'preset distance'.

The wiring forbidden region may mean a region where wiring cannot be disposed (or connected) (i.e., a region where wiring cannot be drawn). For example, when a specific region is where an electronic component is to be mounted, or where electromagnetic shielding or other important constraints exist, the specific region may be set as a wiring forbidden region.

The 45-degree wiring may mean a constraint to make wiring connections at an angle of 45 degrees, not at right angles (90 degrees). For example, the 45-degree wiring is for reducing signal reflection and for allowing signals to be delivered smoothly, and particularly, in case of high-speed signals or sensitive signals, the wiring may be designed (or connected) at an angle of 45 degrees.

A wiring length constraint may mean a constraint that limits the maximum length of a path connecting terminals. This is very important in high-frequency devices, since when a signal propagates along lengthy wiring, the amplitude of the signal decreases, and simultaneously, noise is amplified, resulting in degradation of circuit performance.

Meanwhile, a goal of PCB automatic design is to connect all terminals T1, T2, T3, T4, T5, and T6 included in the net list 210 while satisfying all of the constraint conditions described above (see (c) of FIG. 2).

More specifically, all terminals (connection points) included in the net list 210 need to be electrically connected to each other. For example, according to the net list 210 included in the PCB data 200, the first terminal T1 and the second terminal T2 belonging to a first net (or net group information) must be connected to each other, and the third terminal T3 and the fourth terminal T4 belonging to a second net must be connected to each other.

In this case, when a plurality of terminals are connected to each other according to the net list 210, the wiring connecting the terminals need to be designed (or connected) to satisfy all of the constraint conditions. For example, wiring connecting the first terminal T1 and the second terminal T2, and wiring connecting the third terminal T3 and the fourth terminal T4, need to be designed to satisfy all of the various constraint conditions without conflicting with each other.

As such, in PCB design task, wiring task is the most complex problem, and the PCB wiring problem may be viewed as a combinatorial optimization problem such as a rectilinear Steiner tree packing problem (RSTPP). Here, a Steiner tree may mean a tree that connects multiple (or plural) terminals, and packing may mean placing multiple Steiner trees in the same space. The goal of the PCB wiring problem may be to minimize the cost (or expense) of all Steiner trees. That is, the Steiner tree packing problem may be defined as a problem of finding an optimal combination in a limited space while minimizing paths connecting multiple connection points (terminals).

Here, combinatorial optimization may be a branch of optimization, and may be a field of finding a solution satisfying an optimal objective value from a finite set of discrete solution candidates. For example, one of the combinatorial optimization problems is the traveling salesman problem (TSP), in which, when the positions of cities to be visited by a traveling salesman are fixed, the traveling salesman has a problem in that the order of visiting the cities needs to be determined such that the total travel distance is minimized while visiting each city exactly once. In this case, the objective value of the traveling salesman problem may be the total travel distance between the cities.

PCB design may also be viewed as one type of combinatorial optimization problem. In this case, the goal of the present invention is to derive a structure in which wirings of components are disposed most efficiently without conflicting with each other. In addition, in the present invention, because the actual PCB design problem may be regarded as a Steiner tree problem to which various constraint conditions are added, it may also be referred to as "a constraint condition-added (or a constrained) Steiner tree packing problem."

In this regard, characteristics of the PCB problem may include at least one of path planning (or exploration), trajectory-based multi-agent planning, and multi-layer planning.

Path exploration may mean a task of exploring an optimal path in PCB wiring. For example, while wiring needs to find a shortest path between terminals (connection points), when a wiring of another net already exists, it needs to be bypassed (or avoided) to be connected. Therefore, depending on the existing wiring situation, a bypassing and inefficient path compared to an initially intended shortest path may have to be selected.

The trajectory-based multi-agent planning may refer to planning paths such that each net (path) does not overlap others when the wiring is composed of multiple nets in PCB design. For example, during the wiring process, it is necessary to avoid all the paths of other nets that have already been wired, and this may be similar to the problem in which multiple robots move while avoiding each other's paths. However, in the multi-robot path exploration problem, only the current positions are avoided, whereas in PCB design, there is a difference in that the entire paths that have already been wired need to be considered. That is, the trajectory-based multi-agent planning may have the goal of ensuring that all wirings are connected independently while preventing conflicts.

The multi-layer planning may mean that the PCB has a multi-layer structure, and vias may be used (or utilized, applied, etc.) for interlayer movement. For example, as illustrated in FIG. 3, the multi-layer structure may refer to the PCB 300 being divided into a plurality of layers (or multiple layers). In the multi-layer structure PCB 300, when a conflict between wirings occurs in a specific layer, the wiring may be moved to another layer to be connected. Here, a via is a hole that connects between a plurality of layers (e.g., two layers) of the PCB 300, and since a via occupies a large amount of space, excessive use of vias may lead to a shortage of wiring space. That is, the via used for interlayer movement has a larger area than general wiring, and thus needs to be used carefully.

With reference back to FIG. 1, the path exploration unit 170 may be configured to perform a role of exploring an optimal (or optimized) wiring path that satisfies various constraint conditions. The path exploration unit 170 may perform the role of deriving a wiring path similar to an actual design while satisfying the constraint condition, by using an algorithm (e.g., shortest path exploration algorithm, combinatorial optimization algorithm, etc.) trained with wiring data of a PCB of which design is completed as training data. In the present invention, the path exploration unit 170 may also be referred to as a "first path exploration unit".

In the present invention, in the path exploration process for PCB automatic wiring, at least one algorithm, an artificial neural network, or a generative model (e.g., a diffusion model) may be utilized (or used). In one embodiment, the control unit 150 may perform reinforcement learning (RL) or supervised learning (SL) for a generative model, with wiring data of a PCB of which design is actually completed as training data. The trained generative model may understand complex patterns and design rules of PCB wiring, and may output a result similar to an actual PCB design while satisfying the wiring constraint conditions. In addition, the generative model may be a generative model trained based on data, using a deep learning-based combinatorial optimization algorithm.

Further, in the present invention, algorithms used to explore an optimal wiring path (or to explore a shortest path) may variously exist. Such an algorithm may include an algorithm related to at least one of shortest path exploration or combinatorial optimization. For example, a Pathfinder algorithm, a Dijkstra's algorithm, an A algorithm, a Lee algorithm, a heuristic algorithm, a RankingCost algorithm, and the like may be included. However, the types of algorithms used (or applied) in the present invention are not necessarily limited thereto, and any algorithm related to shortest path exploration or combinatorial optimization may be used.

Meanwhile, the control unit 150 may specify a wiring exploration region for performing wiring for the plurality of terminals T1, T2, T3, T4, T5, and T6 based on the net list 210 included in the PCB data 200, and may perform gridization of the wiring exploration region by dividing such into a plurality of grid cells based on a preset criterion.

Further, the control unit 150 may respectively dispose the plurality of terminals T1, T2, T3, T4, T5, and T6 in at least some of the plurality of grid cells based on the PCB data 200, and may perform a path exploration process (or procedure) for wiring the plurality of terminals T1, T2, T3, T4, T5, and T6, using the path exploration unit 170.

The path exploration unit 170 may explore a shortest path for wiring the plurality of terminals T1, T2, T3, T4, T5, and T6 according to the net list 210 in a state in which the plurality of terminals T1, T2, T3, T4, T5, and T6 are disposed in the wiring exploration region. In this case, the path exploration unit 170 may specify a grid cell of the plurality of grid cells that does not satisfy a preset constraint condition based on a result of wiring the plurality of terminals according to the shortest path, and may update the cost of the wiring exploration region such that the cost of the specified grid cell is increased. Further, the path exploration unit 170 may re-explore a shortest path for wiring the plurality of terminals T1, T2, T3, T4, T5, and T6 according to the net list 210 in the cost-updated wiring exploration region. The further details will be described below.

Next, the heatmap generation unit (or heatmap conversion unit, 180) may be configured to perform a role of generating a heatmap based on the wiring path explored from the path exploration unit 170.

For example, as illustrated in FIG. 15, the heatmap generation unit 180 may generate a heatmap 1510 including a plurality of grid cells (or regions), using, as a guide, a wiring path 1501 of the first terminal T1 and the second terminal T2 explored by the path exploration unit 170 based on a grid 1500. The heatmap generation unit 180 may also be referred to as a "probability calculation unit." The heatmap generation unit 180 may give or calculate probability values for a plurality of grid cells corresponding to the wiring exploration region. The heatmap generation unit 180 may convert the wiring exploration region into a heatmap. The heatmap generation unit 180 may convert the wiring exploration region into a heatmap based on the probability value assigned to each of the plurality of grid cells included in the wiring exploration region.

Among the plurality of grid cells included in the grid 1500, at least some grid cells may include specific grid cells whose costs are increased (or updated) according to preset constraint conditions 1502a and 1502b. In addition, at least some grid cells of the plurality of grid cells included in the grid 1500 may include grid cells corresponding to a shortest path explored from the path exploration unit 170. The grid cells corresponding to the shortest path may also be understood as cells occupied by the shortest path.

The heatmap generation unit 180 may generate the heatmap 1510, using information on the specific grid cells and information on the grid cells corresponding to the shortest path. For example, the heatmap generation unit 180 may generate the heatmap 1510 including (or reflecting) the shortest path 1501 for wiring the terminals T1 and T2 grouped into a first net defined by the net list 210 at a minimum cost, and preset constraint conditions 1502a and 1502b (e.g., wiring forbidden region, conflict region, etc.).

The heatmap generation unit 180 may assign a higher probability to grid cells corresponding to the shortest path, and may assign a lower probability to grid cells not corresponding to the shortest path, such that grid cells that are closer (or adjacent) to the shortest path 1501 explored from the path exploration unit 170, among the plurality of grid cells, have a higher sampling probability.

More specifically, the heatmap generation unit 180 may give a weight to grid cells including the shortest path 1501 (e.g., 1511a, 1511b, 1511c, 1511d, 1511e, 1511f, etc.). In the heatmap 1510, regions 1511a, 1511b, 1511c, 1511d, 1511e, and 1511f to which the weights are given may be visually displayed differently from regions (e.g., 1512a, 1512b, 1512c, 1512d, 1512e, etc.) to which the weights are not given, such that distinction is possible. The regions 1511a, 1511b, 1511c, 1511d, 1511e, and 1511f to which the weights are given may be understood as regions (or zones) having a high probability of being sampled by the sampling-based path exploration unit 190. The further details will be described below.

Next, the sampling-based path exploration unit 190 may be configured to perform a role of exploring an optimized wiring path that satisfies various constraint conditions, based on sampling. More specifically, the sampling-based path exploration unit 190 may explore an optimal wiring path satisfying all the constraint conditions, using the wiring path explored from the path exploration unit 170 as a guide. In the present invention, the sampling-based path exploration unit 190 may also be referred to as a "second path exploration unit."

For example, as illustrated in FIG. 15, the sampling-based path exploration unit 190 may proceed a path exploration process for wiring the first terminal T1 and the second terminal T2 among the plurality of terminals T1, T2, T3, T4, T5, T6, by performing sampling on a continuous coordinate system 1520, based on the heatmap 1510 generated from the heatmap generation unit 180. In this case, points (or dots 1521a, 1521b, 1521c, 1521d) sampled on the continuous coordinate system 1520 may be probabilistically distributed around the shortest path 1501 explored from the path exploration unit 170.

Here, the expression "probabilistically distributed" may mean that there is a high probability that the points to be sampled are positioned in some regions (e.g., 1511a, 1511b, 1511c, 1511d, 1511e, 1511f, etc.) among the plurality of regions included in the heatmap 1510, to which weights are given. That is, some regions to which the weights are given may have a high probability of distribution of the points to be sampled.

Here, some regions to which the weights are given may be some regions to which high probability values are assigned as described above, and the corresponding regions may be regions corresponding to the shortest path while satisfying the constraint condition(s), as a result of grid-based wiring.

Further, the other remaining regions (e.g., 1512a, 1512b, 1512c, 1512d, 1512e, etc.) to which the weights are not given may have a low probability of distribution of the points to be sampled.

Here, the other remaining regions to which the weights are not given may be some regions to which low probability values are assigned as described above, and the corresponding regions may be regions that do not satisfy the constraint condition(s) or regions not corresponding to the shortest path, as a result of the grid-based wiring.

As such, the sampling-based path exploration unit 190 may sample the points required to explore the optimal wiring path on the continuous coordinate system 1520, based on the heatmap 1510.

In the present invention, the continuous coordinate system may mean a coordinate system that precisely defines the position of wiring using real-valued coordinates in PCB design. In the present invention, after the initial grid-based exploration, the continuous coordinate system may be used to express the path that is actually implemented in the final wiring task. In the continuous coordinate system, it is not limited to expressing based on the integer index of a grid cell (e.g., (i, j)), but may designate a detailed position even inside a grid cell through a real-valued coordinate (e.g., (x, y)). Through this, the wiring path may have higher precision beyond cell-level constraints and may be finely adjusted according to the physical requirements of terminals and the net list. In the present invention, the continuous coordinate system reflects the costs and wiring probability information calculated in the wiring exploration step into the actual wiring path, thereby satisfying complex design requirements such as high-density design, prevention of electrical interference, and minimization of signal delay, and may provide higher consistency with the physical wiring path in reality.

Further, the sampling-based path exploration unit 190 may use an algorithm trained with wiring data of a PCB of which design is completed as training data (e.g., an algorithm related to sampling-based path (or space) exploration, or an algorithm related to hybrid sampling-based path exploration, or an algorithm related to probabilistic sampling-based path exploration, etc.) to perform a role of deriving a wiring path similar to an actual design while satisfying the constraint condition.

In the present invention, algorithms used to explore an optimal wiring path based on sampling may variously exist. Such algorithms may include, for example, the Rapidly-Exploring Random Tree (RRT) algorithm, the Pathfinder Guided Rapidly-Exploring Random Tree (RRT-PCB) algorithm, the Probabilistic Roadmap (PRM) algorithm, and the like. However, the types of algorithms used in the present invention are not necessarily limited thereto, and any algorithm related to sampling-based path exploration may be used.

Meanwhile, in the present invention, performing sampling refers to the process of selecting specific points in the exploration space during the PCB wiring design process to explore an optimal wiring path, and increasing the sampling probability near a specific path (specific grid cell) based on the grid-based wiring exploration result, thereby enabling efficient path exploration and improvement in wiring quality.

In this case, the specific points in the exploration space may be points included in grid cells corresponding to the shortest path in the wiring exploration region. Further, the sampled points may be selected based on the various algorithms described above.

For example, the sampled points may be selected based on at least one of i) random sampling, which randomly selects an arbitrary first point in the exploration space, ii) biased sampling, which adjusts the sampling probability according to a specific condition or criterion, iii) uniform sampling, which divides the entire space evenly and samples uniformly, or iv) probability-based sampling, which gives a high probability to specific regions of the exploration space and makes a selection.

In the present invention, when sampling is performed centered on specific grid cells corresponding to the shortest path as a result of the grid-based wiring exploration, it may be regarded as biased sampling being performed. Further, when sampling is performed based on probability after giving a high probability to a specific grid cell, it may be regarded as probability-based sampling being performed, and this may also be expressed as exploring according to the heatmap. Next, the solution derivation unit 195 may be configured to perform a role of deriving (or generating, extracting, etc.) a solution satisfying various constraint conditions based on the exploration result by at least one of the path exploration unit 170 or the sampling-based path exploration unit 190.

In an embodiment, a process of exploring a path while updating costs in the path exploration unit 170 may be repeatedly performed until each signal (e.g., wiring, net, etc.) satisfies a preset constraint condition. In this case, as illustrated in FIG. 15, the solution derivation unit 195 may derive an optimal solution (i.e., the shortest path 1501 that satisfies all of the constraint conditions while wiring the first terminal T1 and the second terminal T2 at a minimum cost) on the grid 1500, based on the result of the path exploration process performed by the path exploration unit 170.

In another embodiment, a process of exploring a path while performing sampling based on a heatmap in the sampling-based path exploration unit 190 may be repeatedly performed until each wiring path satisfies the preset constraint condition(s). In this case, as illustrated in FIG. 15, the solution derivation unit 195 may derive an optimal solution (i.e., an optimal wiring path 1521 that connects the first terminal T1 and the second terminal T2 while satisfying all constraint conditions) that satisfies all constraint conditions on the continuous coordinate system 1520, based on the result of the path exploration process performed by the sampling-based path exploration unit 190.

However, in the present invention, the processes performed in the data parsing unit 160, the path exploration unit 170, the heatmap generation unit 180, the sampling-based path exploration unit 190, and the solution derivation unit 195 may be configured to allow the processes to be performed even by the control unit 150 or a generative model (not illustrated). Hereinafter, for convenience of explanation, the above-described cases will be described without being distinguished.

Meanwhile, the wiring system 100 may interoperate with an agent server AS to provide a user with various services or functions provided in the present invention. Accordingly, the present invention may also be referred to as a "PCB automatic design agent" or a "PCB automatic wiring agent."

The wiring system 100 may interoperate with an agent server AS to provide a user with various services or functions provided in the present invention. The wiring system 100 may also include at least one agent (e.g., artificial intelligence agent (AI agent)). Further, the agent server may be configured to be included in the wiring system 100 according to the present invention.

Here, the agent, that is, the artificial intelligence agent, may refer to a software program capable of interacting with an environment, collecting data, and autonomously determining and performing tasks necessary to achieve a predetermined goal, using the data. In the system or agent server according to the present invention, computer program code for implementing the above-described software program may be provided. For example, when a user sets PCB wiring as a goal, the agent may independently select an optimal action necessary to achieve the goal. For example, an agent may ask the user several questions to receive, as input, the information necessary for PCB wiring, look up information in internal documents, and find solutions to respond. In this case, PCB wiring for achieving the goal may be performed through collaboration with pre-trained sub-agents.

The agent server AS or the wiring system 100 may include a plurality of agents A1, A2, and A3, and each of the agents may be implemented to perform different roles. For example, an agent may receive printed circuit board (PCB) data including information on a net list and a plurality of terminals, from a user, and may control a series of processes for automatically performing PCB wiring based on the PCB data. In this case, the agent may perform interaction with a user terminal, and may perform PCB wiring. Meanwhile, the plurality of agents may perform PCB wiring by cooperating with each other through communication. In this case, one agent may be a main agent that controls each of the agents. Agents other than the main agent may also be referred to as sub-agents.

The main agent, through communication with sub-agents, may command each sub-agent to perform wiring functions specialized to the sub-agent, or may receive data. A sub-agent may be trained to perform a dedicated function for wiring. For example, a sub-agent may be present corresponding to each of the data parsing unit 160, the path exploration unit 170, the heatmap generation unit 180, the sampling-based path exploration unit 190, and the solution derivation unit 195. For example, among the sub-agents, a first sub-agent may perform the role of the data parsing unit 160 by learning the function of data parsing. Alternatively, the first sub-agent may be connected to the data parsing unit 160, and may perform the role of connecting the data parsing unit 160 and the main agent.

In another example, among the sub-agents, a second sub-agent may perform the role of the path exploration unit 170 by learning the path exploration function. Alternatively, the second sub-agent may be connected to the path exploration unit 170, and may perform a role of connecting the path exploration unit 170 and the main agent.

As such, each sub-agent may be configured to perform a dedicated function.

The agent server AS according to the present invention may include a plurality of agents. For example, the agent server AS may include at least one of a first agent (e.g., "Agent 1", A1), a second agent (e.g., "Agent 2", A2), or a third agent (e.g., "Agent 3", A3). In this case, the agents included in the agent server AS according to the present invention are not necessarily limited to the examples described, and may further include other agents (e.g., a fourth agent, a fifth agent, etc.) in addition to the first agent A1, the second agent A2, and the third agent A3. It is obvious that the agents utilized (or applied or used) in the present invention may be variously modified as one or a plurality, depending on the purpose of use or the situation (or case).

Each of the plurality of agents A1, A2, and A3 may be configured to perform a different role and to operate according to a user input (or command). Here, the user input may include text, image (or video), voice, and the like. Hereinafter, for convenience of description, the form in which the user input is input will not be distinguished separately and will be described as being referred to as PCB data.

When the agent server AS receives PCB data from a user terminal 10, the agent server AS may perform analysis on the received PCB data, and based on the analysis result, may extract at least one of net group information, position information for each of a plurality of terminals, or a constraint condition.

In addition, the agent server AS, according to the PCB data, may respectively select (or specify) an agent for wiring the terminals included in the PCB data along an optimal path, from among the plurality of agents A1, A2, and A3.

In an embodiment, when the agent server AS needs to explore an optimal path for wiring the plurality of terminals satisfying all of the constraint conditions, based on the PCB data, the agent server AS may respectively select the first agent A1, the second agent A2, and the third agent A3 from among the plurality of agents A1, A2, and A3.

The first agent A1 may be an agent configured (or trained) to perform a role of, based on the PCB data, i) specifying a wiring exploration region for performing wiring of the plurality of terminals, ii) performing gridization of the wiring exploration region into a plurality of grid cells based on a preset criterion, iii) disposing the plurality of terminals, respectively, in at least some grid cells of the plurality of grid cells, and iv) exploring a shortest path for wiring the plurality of terminals independently of the constraint condition, in a state in which the plurality of terminals are disposed in the wiring exploration region.

In addition, the second agent A2 may be an agent configured to perform the role of, based on a result of wiring the plurality of terminals according to the shortest path explored by the first agent A1, i) specifying, from among the plurality of grid cells, a grid cell that does not satisfy at least one constraint condition (e.g., conflict (or crossing) zone, line width and spacing, wiring forbidden zone, etc.), ii) updating a cost of the wiring exploration region such that a cost of the specified grid cell is increased, and
iii) re-exploring a shortest path for wiring the plurality of terminals at minimum cost, in the cost-updated wiring exploration region, while satisfying the at least one constraint condition according to the PCB data.

Further, the third agent A3 may be an agent configured to perform the role of exploring an optimal path for wiring the plurality of terminals while satisfying all of the at least one constraint condition and a specific constraint condition (e.g., 45-degree angle), based on the result explored by the second agent A2. The third agent A3 may i) calculate wiring probabilities of the plurality of grid cells, using information on grid cells corresponding to the shortest path, and ii) perform wiring of the plurality of terminals according to the PCB data in a continuous coordinate system, using the wiring probabilities of the plurality of grid cells, thereby exploring an optimal path for wiring the plurality of terminals while satisfying all of the constraint conditions.

Finally, the agent server AS may integrate wiring exploration (or wiring performing) results of each of the plurality of agents A1, A2, and A3, and may provide the integrated result (i.e., optimized solution) as a response to the user input. More specific details regarding this will be described later.

Meanwhile, the present invention is directed to providing a sampling-based wiring method and system capable of automatically designing a printed circuit board (PCB), using artificial intelligence. More specifically, the present invention is directed to providing a sampling-based wiring method and system capable of efficiently performing PCB automatic wiring while satisfying various constraint conditions required for PCB wiring. Hereinafter, a grid-based wiring method will be described more specifically first.

The PCB wiring automatic design method, according to the present invention, may include: receiving printed circuit board (PCB) data including a net list and information on a plurality of terminals; updating a cost of the wiring exploration region so that a cost of at least some of the wiring exploration region is increased based on a preset constraint condition; exploring a shortest path for wiring the plurality of terminals according to the net list in the cost-updated wiring exploration region; and performing wiring of the plurality of terminals based on wiring probability according to the shortest path.

In the present invention, in the updating of the cost of the wiring exploration region, the cost of the wiring exploration region may be updated so that a cost of at least some of grid cells among a plurality of grid cells gridization-performed based on a preset criterion is increased based on the preset constraint condition.

Further, in the exploring of the shortest path, the shortest path for wiring the plurality of terminals according to the net list may be explored by exploring grid cells whose cost is minimized in the cost-updated wiring exploration region.

Further, the performing of the wiring of the plurality of terminals may include: calculating wiring probability of the plurality of grid cells by using information on grid cells corresponding to the shortest path among the plurality of grid cells; and performing wiring of the plurality of terminals in a continuous coordinate system by using the wiring probability of the plurality of grid cells.

First, in the present invention, a process of receiving printed circuit board (PCB) data including information on a net list and a plurality of terminals may be performed (S510, see FIG. 5).

The wiring system 100 according to the present invention may be implemented in various forms such as an application, software, web-site, and program. However, in this specification, for convenience of explanation, the implementation of the wiring system 100 is not limited to any specific form.

The control unit 150 may receive PCB data from the user terminal 10. For example, as illustrated in FIG. 1, the control unit 150 may provide a service page 1000 linked with the wiring system 100 to the user terminal 10. In addition, the control unit 150, in order to receive a user input for PCB data, may provide a graphical object (e.g., "Confirm") linked with a PCB data reception function in a region of the service page 1000. The control unit 150 may receive PCB data 200 input from the user terminal 10, based on the graphical object (e.g., "Confirm") being selected from the user terminal 10.

The PCB data 200 may include at least one of a net list (e.g., "Net list", 210), terminal information (e.g., "Terminal", 220), or a constraint condition(s) 230. Here, the constraint condition(s) 230 may also be understood as a preset constraint condition(s).

The control unit 150 may store the received PCB data 200 in a storage unit (or memory, 140), and may input (or transmit) the stored PCB data 200 to the data parsing unit 160.

The data parsing unit 160, through a PCB data parsing process, may analyze the PCB data 200, and may extract information necessary for PCB automatic design from the PCB data 200 (S410, see FIG. 4A).

More specifically, the data parsing unit 160 may analyze (or interpret) the PCB data 200, and may extract at least one of the net list 210, terminal information 220, or wiring constraint condition(s) 230 included in the PCB data 200, based on the analysis result. For example, the data parsing unit 160 may analyze the PCB data 200, and may extract at least one of net group information, coordinate information (or position information, coordinate values, etc.) for each of the plurality of terminals T1, T2, T3, T4, T5, and T6, or wiring constraint condition(s).

Further, the control unit 150 may store, in the storage unit 140, information extracted from PCB data 200 through the data parsing unit 160.

Next, in the present invention, a process of specifying a wiring exploration region for performing wiring of a plurality of terminals based on a net list may be performed (S520), and a process of performing gridization of the wiring exploration region into a plurality of grid cells based on a preset criterion may be performed (S530, see FIG. 5).

The control unit 150 may specify a wiring exploration region for performing wiring of the plurality of terminals T1, T2, T3, T4, T5, and T6, based on the net list 210 stored in the storage unit 140.

Here, the wiring exploration region may mean a path exploration range or region in which wiring may be performed. This may also be understood as a region in which wiring is possible in PCB design.

Specifically, the control unit 150 may plan wiring of the plurality of terminals T1, T2, T3, T4, T5, and T6 based on connection relationships defined in the net list 210. The control unit 150 may determine, based on the net list 210, which terminals among the plurality of terminals T1, T2, T3, T4, T5, and T6 are to be wired. For example, it is assumed that the net list 210 includes a first net group information (e.g., "Net 1: Terminal 1, Terminal 2") defining that the first terminal T1 and the second terminal T2 need to be electrically connected, a second net group information (e.g., "Net 2: Terminal 3, Terminal 4") defining that the third terminal T3 and the fourth terminal T4 need to be electrically connected, and a third net group information (e.g., "Net 3: Terminal 5, Terminal 6") defining that the fifth terminal T5 and the sixth terminal T6 need to be electrically connected. The control unit 150 may specify a wiring exploration region for performing wiring of the plurality of terminals T1, T2, T3, T4, T5, and T6, based on the net group information included in the net list 210.

When the wiring exploration region is specified, the control unit 150 may divide the specified wiring exploration region into grid units and may perform gridization.

The gridization may be a task of dividing a space into grid units, performing discretization, and expressing each unit as explorable nodes and connection structures. For example, the grid unit may refer to a square or rectangular cell on a two-dimensional plane, in which the crossing points of respective grids become nodes, and lines connecting grids may serve as edges.

The gridization in the present invention is dividing the wiring exploration region into grid units and expressing it as structured data, and may be understood as a step for constructing an environment in which a generative model (or artificial intelligence algorithm) may efficiently explore a path.

In the present invention, a step of performing gridization may include a process (or step) of generating a grid-based data structure by dividing a specified wiring exploration region into discrete grid units according to a preset criterion, or a process of performing gridization of the wiring exploration region by dividing it into rows and columns according to a preset grid size.

Specifically, as illustrated in (a) of FIG. 6, the control unit 150 may perform gridization of a specified wiring exploration region 600 into a plurality of grid cells 601 to 625 based on a preset criterion. Here, the grid cell may mean a division of the wiring exploration region 600 into small unit cells through discretization. In this case, the preset criterion may be set based on at least one of grid size (or dimension, e.g., 1mm x 1mm or 8 x 8, etc.) or unit spacing.

In an embodiment, in the present invention, the grid size may be set based on a range reachable through a plurality of grid cells (e.g., four cells) to a terminal that exists at the closest position, using the corresponding terminal as a reference. In the present invention, when the closest terminal exists, the grid size or distribution may be determined (or set) by considering the range reachable through movement between the plurality of grid cells to the terminal. This may also be understood as being determined in the PCB data parsing process performed through the data parsing unit 160.

However, the preset criterion or the grid size (or grid dimension) is not necessarily limited to the mentioned examples and may obviously be variously changed (or set) by an administrator (or user, engineer, etc.) of the grid-based wiring system 100 or the grid-based wiring system 100 itself.

Further, in the present invention, based on PCB data, a process of disposing the plurality of terminals, respectively, in at least some of the plurality of grid cells may be performed (S540, see FIG. 5).

The control unit 150 may dispose, respectively, the plurality of terminals T1, T2, T3, T4, T5, and T6 in one of the plurality of grid cells 601 to 625 included in the grid.

Specifically, the control unit 150 may dispose, respectively, the plurality of terminals T1, T2, T3, T4, T5, and T6 in at least some of the plurality of grid cells 601 to 625, based on the PCB data 200 stored in the storage unit 140.

As described above, the PCB data 200 may include at least one of net group information, position information for each of the plurality of terminals T1, T2, T3, T4, T5, and T6, or a constraint condition(s).

In this case, the control unit 150, based on the position information for each of the plurality of terminals T1, T2, T3, T4, T5, and T6, may specify (or determine, select, etc.) grid cells in which each terminal may be positioned among the plurality of grid cells 601 to 625.

For example, the control unit 150 may determine grid cells in which the first terminal T1 and the second terminal T2, belonging to a first net, may be respectively disposed, among the plurality of grid cells 601 to 625. The control unit 150, based on the position information for each of the first terminal T1 and the second terminal T2, may determine the grid cell in which the first terminal T1 may be disposed as a first grid cell 603, and may determine the grid cell in which the second terminal T2 may be disposed as a second grid cell 621.

In another example, the control unit 150 may determine grid cells in which the third terminal T3 and the fourth terminal T4, which belong to the second net, may be respectively disposed, among the plurality of grid cells 601 to 625. The control unit 150, based on the position information for each of the third terminal T3 and the fourth terminal T4, may determine the grid cell in which the third terminal T3 may be disposed as a third grid cell 607, and may determine the grid cell in which the fourth terminal T4 may be disposed as a fourth grid cell 615.

Further, the control unit 150, based on the grid cells 603, 621, 607, and 615 in which each of the plurality of terminals T1, T2, T3, T4, T5, and T6 may be positioned being specified, may respectively dispose each of the plurality of terminals T1, T2, T3, T4, T5, and T6 in each of the specified grid cells 603, 621, 607, and 615.

For example, the control unit 150, according to the net list 210, may dispose the first terminal T1, which belongs to the first net, in the first grid cell 603, and may dispose the second terminal T2, which is to be electrically connected to the first terminal T1, in the second grid cell 621. In this case, the first terminal T1 may be understood as the point at which wiring starts (i.e., start point, departure point, etc.), and the second terminal T2 may be understood as the point at which the wiring, starting from the first terminal T1, is finally connected (i.e., end point, target point, etc.).

In another example, the control unit 150, according to the net list 210, may dispose the third terminal T3, which belongs to the second net, in the third grid cell 607, and may dispose the fourth terminal T4, which is to be electrically connected to the third terminal T3, in the fourth grid cell 615. In this case, the third terminal T3 may be understood as the point at which wiring starts, and the fourth terminal T4 may be understood as the point at which the wiring, starting from the third terminal T3, is finally connected.

That is, the control unit 150, based on the net list 210 included in the PCB data 200, may respectively dispose the terminals to be electrically connected in the respective specific grid cells. As such, in the present invention, the terminals are disposed in the grid cells, and thereafter may be used as a departure point and a target point in the wiring exploration process.

Meanwhile, in the present invention, a process of exploring a shortest path for wiring a plurality of terminals according to a net list, in a state where the plurality of terminals are disposed in the wiring exploration region, may be performed (S550, FIG. 5).

In the present invention, based on a grid generated based on PCB data, a shortest path for wiring a plurality of terminals may be explored (S420, FIG. 4A). In this case, the path exploration unit 170 may detect a region that violates the constraint condition(s), using an algorithm (shortest path exploration algorithm) trained on various PCB wiring data of which design is actually completed, and may perform re-exploration by giving (or imposing) a penalty to a conflict region.

More specifically, the path exploration unit 170 may determine whether the constraint condition(s) is satisfied among the paths explored for each net, and may increase a cost at a grid point where a constraint condition occurs, to enable bypassing the corresponding point in a next iteration process. By repeating such process multiple times, the path may ultimately converge to a path satisfying the constraint condition(s).

Here, the cost may refer to a cost function, which is a weight assigned (or given) to each of a plurality of grid cells included in the grid, or to a path, in order to optimize a wiring path, used for exploring a path, evaluating the efficiency of a specific path, and satisfying the constraint condition.

That is, the path exploration unit 170 may, i) give a penalty to a corresponding region when each wiring violates constraint condition, and ii) repeat a process of performing rewiring while avoiding the region where the penalty is given, to derive a wiring result (or solution) that satisfies all of the constraint conditions. In this case, the path exploration unit 170 may be configured to explore a shortest path for PCB wiring in consideration (or reflection) of various industrial requirements (e.g., maintaining spacing between PCB wirings, distance between component pads and wiring, adjusting the number of vertical vias (holes for electrical connection) between PCB layers, etc.).

The control unit 150 may explore a shortest path for wiring the plurality of terminals T1, T2, T3, T4, T5, and T6, using the path exploration unit 170, in a state in which the plurality of terminals T1, T2, T3, T4, T5, and T6 are disposed in the wiring exploration region 600.

The path exploration unit 170 may explore a shortest path for wiring the plurality of terminals T1, T2, T3, T4, T5, and T6 according to the net list 210. More specifically, the path exploration unit 170 may explore a shortest path for wiring the terminals grouped into the same net. In this case, in the present invention, the shortest path exploration step (or process) may include an initial shortest path exploration step and a shortest path exploration step through re-exploration.

First, as illustrated in (b) of FIG. 6, in the initial shortest path exploration step, the path exploration unit 170 may give the same cost (e.g., "1") to each of the plurality of grid cells 601 to 625 in the wiring exploration region 600.

Further, in a state in which the same cost is given to each of the plurality of grid cells 601 to 625 in the wiring exploration region 600, the path exploration unit 170 may explore a shortest path for wiring the terminals grouped into each net defined by the net list, at a minimum cost.

In this case, in the initial shortest path exploration step, the path exploration unit 170 may explore a shortest path having the lowest cost, independently of the constraint condition. In the initial shortest path exploration step, even if there is a conflict (congestion or overlap) between shortest paths connecting terminals grouped into different nets, the shortest path, in which the sum of costs of the path connecting the terminals has the lowest value, may be explored.

That is, the path exploration unit 170 may explore a shortest path having the lowest cost, independently of the constraint condition(s), from a plurality of grid cells (or cost map) to which costs are given. Here, the constraint condition(s) may include a first constraint condition for preventing the wiring of the plurality of terminals T1, T2, T3, T4, T5, and T6 according to the net list 210 from crossing each other.

In an embodiment, the path exploration unit 170 may explore a first shortest path for wiring the first terminal T1 and the second terminal T2, which are grouped into the first net defined by the net list, at a minimum cost. In this case, the path exploration unit 170 may explore the first shortest path having the lowest value (e.g., "7") of the sum of costs of the path (or net) connecting the first terminal T1 corresponding to a start point and the second terminal T2 corresponding to a target point, without considering the constraint condition(s).

In another embodiment, the path exploration unit 170 may explore a second shortest path for wiring the third terminal T3 and the fourth terminal T4, which are grouped into the second net defined by the net list, at a minimum cost. In this case, the path exploration unit 170 may explore the second shortest path having the lowest value (e.g., "5") of the sum of costs of the path (or net) connecting the third terminal T3 corresponding to a start point and the fourth terminal T4 corresponding to a target point, without considering the constraint condition.

Further, the path exploration unit 170 may wire the plurality of terminals based on the explored shortest path.

More specifically, the path exploration unit 170 may wire the terminals grouped into each net, according to the shortest path explored in the initial shortest path exploration step.

For example, as illustrated in (b) of FIG. 6, the path exploration unit 170 may wire the first terminal T1 and the second terminal T2 on the grid cells 603, 608, 611, 612, 613, 616, and 621 corresponding to (or applicable to) the first shortest path, according to the first shortest path.

In another example, the path exploration unit 170 may wire the third terminal T3 and the fourth terminal T4 on the grid cells 607, 608, 609, 610, and 615 corresponding to the second shortest path, according to the second shortest path.

Meanwhile, in the present invention, a process of specifying a grid cell that does not satisfy a preset constraint condition among the plurality of grid cells, based on a result of wiring the plurality of terminals according to the shortest path, may be performed (S560, see FIG. 5).

The path exploration unit 170 may specify a wiring that does not satisfy the preset constraint condition among the wirings connecting the plurality of terminals, based on a result of wiring the plurality of terminals according to the shortest path.

Specifically, the path exploration unit 170 may specify a grid cell that does not satisfy the constraint condition(s) among the grid cells 603, 608, 611, 612, 613, 616, and 621 occupied by the first shortest path, and the grid cells 607, 608, 609, 610, and 615 occupied by the second shortest path.

With reference to (b) of FIG. 6, the wiring 631 connecting the first terminal T1 and the second terminal T2, and the wiring 632 connecting the third terminal T3 and the fourth terminal T4, may cross each other and may not satisfy the constraint condition (first constraint condition). This may be because the shortest path is explored based on the lowest cost value independently of the constraint condition(s), and therefore, a crossing may occur between the first wiring 631 according to the first shortest path and the second wiring 632 according to the second shortest path.

The path exploration unit 170 may specify a grid cell that does not satisfy the preset constraint condition among the plurality of grid cells 601 to 625. As illustrated in (c) of FIG. 6, the path exploration unit 170 may analyze the grid cells 603, 608, 611, 612, 613, 616, and 621 occupied by the first shortest path and the grid cells 607, 608, 609, 610, and 615 occupied by the second shortest path, and based on the analysis result, may specify a specific grid cell 608 that does not satisfy the first constraint condition.

Here, the specific grid cell 608 may be a point (or zone) where the first wiring 631 and the second wiring 632 cross (or conflict) with each other, and may correspond to a point that does not satisfy the first constraint condition. That is, the specific grid cell 608 may correspond to cells that overlap each other, among the cells occupied by the first shortest path and the second shortest path.

When a grid cell that does not satisfy the constraint condition is specified, in the present invention, a process may be performed of updating the cost of the wiring exploration region such that the cost of the specific grid cell that does not satisfy the constraint condition(s) is increased (S570), and of re-exploring the shortest path for wiring the plurality of terminals according to the net list in the cost-updated wiring exploration region (S580, see FIG. 5).

The path exploration unit 170 may update the cost of the wiring exploration region 600 such that the cost of the specific grid cell 608 is increased.

Here, "updating the cost" may be understood as setting the cost of the specific grid cell higher than the costs of other grid cells, so that the specific grid cell corresponding to the overlapping cell is not included in the re-explored shortest path, in the shortest path to be re-explored to be performed after the initial shortest path exploration step. In addition, "increasing the cost" may also be understood as giving a penalty to the specific grid cell.

As illustrated in (d) of FIG. 6, the path exploration unit 170 may update the cost of the specific grid cell 608 specified as a cell that does not satisfy the first constraint condition. For example, the path exploration unit 170 may set the cost of the specific grid cell 608 among the plurality of grid cells 601 to 625 to a higher cost (e.g., "1.5") than that of other grid cells.

In this case, the path exploration unit 170, in order to explore the shortest path that satisfies the first constraint condition in the re-exploration step, may update the cost of some grid cells among the plurality of grid cells 601 to 625, even in addition to the specific grid cell 608. In this case, the cost values of the grid cells 603, 607, 609, 610, 611, 612, 613, 615, 616, and 621 updated in addition to the specific grid cell 608 may be updated to lower cost values (e.g., "1.1") than the cost of the specific grid cell 608. As an example, the some grid cells 603, 607, 609, 610, 611, 612, 613, 615, 616, and 621 updated among the plurality of grid cells 601 to 625, in addition to the specific grid cell 608, may include at least some of the grid cells 603, 611, 612, 613, 616, and 621 occupied by the first shortest path or the grid cells 607, 609, 610, and 615 occupied by the second shortest path.

Meanwhile, the path exploration unit 170 may re-explore a shortest path for wiring a plurality of terminals T1, T2, T3, T4, T5, and T6 in the cost-updated wiring exploration region 600.

More specifically, the path exploration unit 170 may re-explore a shortest path for wiring the plurality of terminals T1, T2, T3, T4, T5, and T6 in the cost-updated wiring exploration region 600, according to the net list 210.

In the re-exploration step, the path exploration unit 170 may re-explore the first shortest path of the first net and the second shortest path of the second net so as to avoid the specific grid cell 608 in which the cost has been increased by the cost update.

As illustrated in (e) of FIG. 6, the path exploration unit 170 may re-explore a shortest path for wiring the first terminal T1 and the second terminal T2 grouped into the first net, so as to avoid the specific grid cell 608 in which the cost is set high. In this case, the path exploration unit 170 may re-explore the first shortest path for wiring the first terminal T1 and the second terminal T2 in consideration of the first constraint condition.

In addition, the path exploration unit 170 may re-explore a shortest path for wiring the third terminal T3 and the fourth terminal T4 grouped into the second net, so as to avoid the specific grid cell 608 in which the cost is set high. In this case, the path exploration unit 170 may re-explore the second shortest path for wiring the third terminal T3 and the fourth terminal T4 in consideration of the first constraint condition.

Accordingly, the specific grid cell 608 may not be included in the first shortest path and the second shortest path that are re-explored. With reference to (e) of FIG. 6, it can be confirmed that the specific grid cell 608 is not included among the cells 601, 602, 603, 606, 611, 616, and 621 occupied by the re-explored first shortest path and the cells 607, 612, 613, 614, and 615 occupied by the re-explored second shortest path.

Meanwhile, in the present invention, even if a wiring path exploration (or re-exploration) satisfying a specific constraint condition is completed, the wiring path may be explored until other remaining constraint condition in addition to the specific constraint condition are satisfied.

In the present invention, the constraint condition may further include a second constraint condition related to at least one of a spacing distance between wirings of each net included in the net list 210 and a line width of each net.

In an embodiment, the second constraint condition may be information that is specified and extracted by the control unit 150, from the constraint condition 230 included in the PCB data 200, the information being related to at least one of a spacing distance between wirings of each net included in the net list 210 or a line width of each net.

The path exploration unit 170 may specify a second specific grid cell that does not satisfy the second constraint condition, in a state in which a cost of a first specific grid cell specified according to the first constraint condition has been updated.

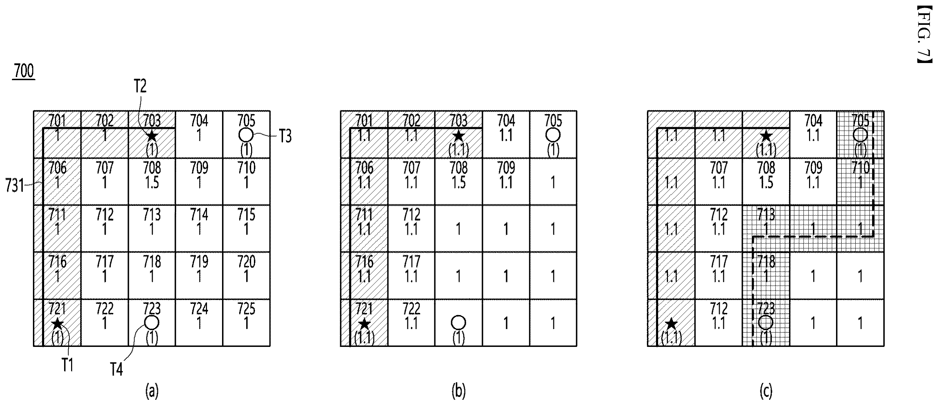

For example, as illustrated in (a) of FIG. 7, a cost of a specific grid cell 708 related to wiring crossing (or conflict) among a plurality of grid cells 701 to 725 of a wiring exploration region 700 may be set higher than costs of other grid cells. Such a specific grid cell 708 may be understood as a first specific grid cell 708 specified according to the first constraint condition. In this case, the first specific grid cell 708 may be specified as one or plurality, depending on the number of overlapping cells, based on the first constraint condition.

More specifically, the path exploration unit 170 may specify a second specific grid cell related to at least one of a spacing distance between wirings of each net or a line width of each net, in a state in which the cost of the first specific grid cell 708 specified according to the first constraint condition has been updated.

In this case, the path exploration unit 170 may specify one of the re-explored first shortest path or the re-explored second shortest path as a final wiring. For example, as illustrated in (a) of FIG. 7, the path exploration unit 170 may specify a first wiring 731 that connects the first terminal T1 and the second terminal T2 belonging to the first net as a final wiring. The first wiring 731 may be understood as a wiring that connects the first terminal T1 and the second terminal T2 according to the re-explored first shortest path.

In addition, the path exploration unit 170 may specify (or determine) a grid cell neighboring the shortest path specified as the final wiring, among the plurality of grid cells 701 to 725, as a second specific grid cell that does not satisfy the second constraint condition. For example, as illustrated in (b) of FIG. 7, after specifying the first shortest path as the final wiring, based on the second constraint condition, the path exploration unit 170 may specify grid cells 704, 707, 709, 712, 717, and 722, which are neighboring the grid cells 701, 702, 703, 706, 711, 716, and 721 occupied by the first shortest path specified as the final wiring, as a second specific grid cell that does not satisfy the second constraint condition.

Because the line width of the first net specified as the final wiring and the spacing distance between wirings need to be considered, the grid cells 704, 707, 709, 712, 717, and 722 specified as the second specific grid cells may be specified as grid cells neighboring the grid cells 701, 702, 703, 706, 711, 716, and 721 occupied by the first net.

Further, path exploration unit 170 may additionally increase the cost of the second specific grid cells in a state in which the cost of first specific grid cell 708 is increased (or updated). Here, increasing the cost may be understood as setting the cost of second specific grid cells 704, 707, 709, 712, 717, and 722 higher than the costs of other grid cells, such that not only the first specific grid cell 708, which does not satisfy the first constraint condition, but also the second specific grid cells 704, 707, 709, 712, 717, and 722, which do not satisfy the second constraint condition, are not included in the re-explored shortest path.

As illustrated in (b) of FIG. 7, the path exploration unit 170 may set the cost of second specific grid cells 704, 707, 709, 712, 717, and 722, which do not satisfy the second constraint condition to have a higher cost (e.g., "1.1") than that of other grid cells, among the plurality of grid cells 701 to 725.

Meanwhile, in the wiring exploration region 700 where the costs of first specific grid cell 708 and second specific grid cells 704, 707, 709, 712, 717, and 722 are updated, the path exploration unit 170 may re-explore the shortest path of another net, not the shortest path of the net specified as the final wiring.

More specifically, the path exploration unit 170 may re-explore the second shortest path of the second net, not the first shortest path of the first net specified as the final wiring, based on the increased costs of the first specific grid cell 708 and the second specific grid cells 704, 707, 709, 712, 717, and 722.

As illustrated in (c) of FIG. 7, the path exploration unit 170 may re-explore a shortest path for wiring the third terminal T3 and the fourth terminal T4, grouped into the second net, so as to avoid the first specific grid cell 708 and the second specific grid cells 704, 707, 709, 712, 717, and 722 whose costs are increased. In this case, the path exploration unit 170 may re-explore the second shortest path for wiring the third terminal T3 and the fourth terminal T4 by considering both the first constraint condition and the second constraint condition.

Accordingly, in the re-explored second shortest path, the first specific grid cell 708 and the second specific grid cells 704, 707, 709, 712, 717, and 722 may not be included. With reference to (c) of FIG. 7, among the cells 705, 710, 713, 714, 715, 718, and 723 occupied by the re-explored second shortest path, it can be confirmed that the first specific grid cell 708 and the second specific grid cells 704, 707, 709, 712, 717, and 722 are not included.

Meanwhile, in the present invention, the constraint condition(s) may further include a third constraint condition related to a wiring forbidden zone in which wiring is restricted in the wiring exploration region.

In an embodiment, the third constraint condition may be information extracted, by the control unit 150, by specifying information related to a wiring forbidden zone in which wiring is restricted in the wiring exploration region, from the constraint condition 230 included in the PCB data 200.

The path exploration unit 170, in a state where the costs of the first specific grid cell 708 and the second specific grid cells 704, 707, 709, 712, 717, and 722 are updated according to the first constraint condition and the second constraint condition, may specify a third specific grid cell that does not satisfy the third constraint condition.

More specifically, the path exploration unit 170 may specify the third specific grid cell related to a wiring forbidden zone in which wiring is restricted in a state where the costs of the first specific grid cell 708 specified according to the first constraint condition and the second specific grid cells 704, 707, 709, 712, 717, and 722 specified according to the second constraint condition are updated.

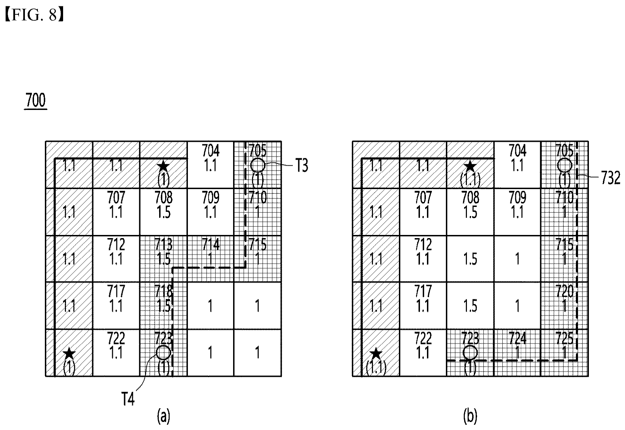

For example, as illustrated in (a) of FIG. 8, the path exploration unit 170 may specify grid cells 713 and 718, which are related to a wiring detection zone among the plurality of grid cells 701 to 725, as third specific grid cells not satisfying the third constraint condition, based on the position information of the wiring forbidden zone included in PCB data 200.

Further, the path exploration unit 170 may further increase the cost of the third specific grid cells 713 and 718 in a state where the cost of the first specific grid cell 708 and the second specific grid cells 704, 707, 709, 712, 717, 722 is increased. Here, increasing the cost may be understood as setting the cost of the third specific grid cells 713 and 718 to be higher than the costs of other grid cells, so that the third specific grid cells 713 and 718 that do not satisfy the third constraint condition, as well as the first specific grid cell 708 and the second specific grid cells 704, 707, 709, 712, 717, and 722, which do not satisfy the first and second constraint conditions, are not included in the re-explored shortest path.

As illustrated in (a) of FIG. 8, the path exploration unit 170 may set the cost of the third specific grid cells 713 and 718, which do not satisfy the third constraint condition, among the plurality of grid cells 701 to 725, to have a cost higher than those of other grid cells (e.g., "1.5").

Further, the path exploration unit 170 may re-explore a shortest path of another net, not the shortest path of the net specified as a final wiring, in the wiring exploration region 700 where the costs of the first specific grid cell 708, the second specific grid cells 704, 707, 709, 712, 717, and 722, and the third specific grid cells 713 and 718 are updated.

More specifically, the path exploration unit 170 may re-explore the second shortest path of the second net, which is not the first shortest path of the first net specified as the final wiring, based on the increased costs of the first specific grid cell 708, the second specific grid cells 704, 707, 709, 712, 717, and 722, and the third specific grid cells 713 and 718.

As illustrated in (b) of FIG. 8, the path exploration unit 170 may re-explore a shortest path for wiring the third terminal T3 and the fourth terminal T4, grouped as the second net, so as to avoid the first specific grid cell 708, the second specific grid cells 704, 707, 709, 712, 717, and 722, and the third specific grid cells 713 and 718, whose costs are increased. In this case, the path exploration unit 170 may re-explore the second shortest path for wiring the third terminal T3 and the fourth terminal T4, by considering all of the first constraint condition, the second constraint condition, and the third constraint condition.

Accordingly, in the re-explored second shortest path, the first specific grid cell 708, the second specific grid cells 704, 707, 709, 712, 717, and 722, and the third specific grid cells 713 and 718 may not be included. With reference to (b) of FIG. 8, it can be confirmed that among the cells 705, 710, 715, 720, 723, 724, and 725 occupied by the re-explored second shortest path, the first specific grid cell 708, the second specific grid cells 704, 707, 709, 712, 717, 722, and the third specific grid cells 713, 718 are not included.

The path exploration unit 170 may specify the second shortest path as the final wiring. For example, as illustrated in (b) of FIG. 8, the path exploration unit 170 may specify a second wiring 732, which connects the third terminal T3 and the fourth terminal T4 belonging to the second net, as the final wiring. The second wiring 732 may be understood as a wiring that connects the third terminal T3 and the fourth terminal T4 according to the re-explored second shortest path.

Meanwhile, as described above, in the present invention, the constraint conditions may include at least one of i) the first constraint condition that prevents wirings of a plurality of terminals according to a net list from crossing with each other, ii) the second constraint condition related to at least one of a spacing distance between wirings of respective nets included in the net list and a line width of respective nets, or iii) the third constraint condition related to a wiring forbidden zone where wiring is restricted in a wiring exploration region.

In the process of specifying a grid cell that does not satisfy a constraint condition(s) in the present invention, at least one specific grid cell that does not satisfy at least one of the first constraint condition, the second constraint condition, or the third constraint condition among a plurality of grid cells may be specified.

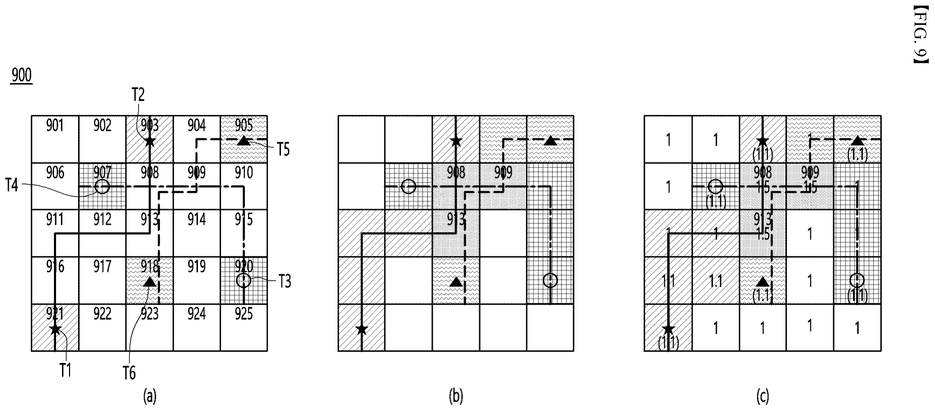

In an embodiment, it is assumed that in the present invention, among a plurality of constraint conditions, the first constraint condition is set to the highest priority (first priority), and as next priorities, the third constraint condition (second priority) and the second constraint condition (third priority) are set. As illustrated in (a) and (b) of FIG. 9, the path exploration unit 170 may specify the first specific grid cells 908 and 909, which do not satisfy the first constraint condition, with the highest priority among a plurality of grid cells 901 to 925 in a wiring exploration region 900, according to a preset priority order.

Further, when the specification of the first specific grid cells 908 and 909 is completed, the path exploration unit 170 may sequentially specify cells according to remaining constraint conditions. For example, as illustrated in (b) of FIG. 9, the path exploration unit 170, after preferentially specifying the first specific grid cells 908 and 909 which do not satisfy the first constraint condition, may specify a third specific grid cell 913, which does not satisfy the third constraint condition, among the plurality of grid cells 901 to 925 in the wiring exploration region 900, according to the third constraint condition, which has the next highest priority after the first constraint condition.

Since the process of shortest path exploration has been described in more detail above, the following description will be made briefly in order to avoid redundancy of explanation.

Further, the path exploration unit 170 may update the cost of the wiring exploration region 900, so that the cost of a specific grid cell that do not satisfy a constraint condition(s) is increased. For example, as illustrated in (c) of FIG. 9, the path exploration unit 170 may update the cost of the wiring exploration region 900, so that the costs of the first specific grid cells 908 and 909, which do not satisfy the first constraint condition, and the third specific grid cell 913, which does not satisfy the third constraint condition, are increased (e.g., increased to "1.5").

Finally, the path exploration unit 170 may re-explore shortest paths for wiring the plurality of terminals T1, T2, T3, T4, T5, and T6 according to the net list, in the cost-updated wiring exploration region 900, and may specify the re-explored shortest paths as final wirings.

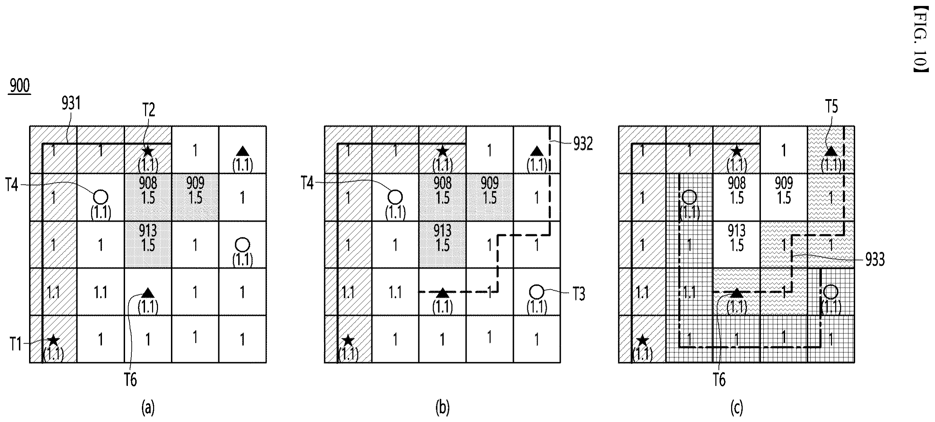

As illustrated in (a) to (c) of FIG. 10, the path exploration unit 170 may re-explore shortest paths for wiring the first terminal T1 and the second terminal T2 grouped into the first net, the third terminal T3 and the fourth terminal T4 grouped into the second net, and the fifth terminal T5 and the sixth terminal T6 grouped into the third net. For example, the path exploration unit 170 may re-explore a first shortest path for wiring the first terminal T1 and the second terminal T2, a second shortest path for wiring the third terminal T3 and the fourth terminal T4, and a third shortest path for wiring the fifth terminal T5 and the sixth terminal T6, so as to avoid the first specific grid cells 908 and 909 and the third specific grid cell 913, whose costs are set high. Further, the path exploration unit 170 may specify a first wiring 931 that connects the first terminal T1 and the second terminal T2 according to the re-explored first shortest path, may specify a second wiring 932 that connects the third terminal T3 and the fourth terminal T4 according to the second shortest path, and may specify a third wiring 933 that connects the fifth terminal T5 and the sixth terminal T6 according to the third shortest path.

As such, in the present invention, by repeatedly exploring wiring paths until all constraint conditions are satisfied, it may be possible to derive (or extract, generate, etc.) an optimal wiring path that satisfies various constraint conditions required for PCB wiring.

Meanwhile, when a PCB defined by the PCB data 200 is composed of a plurality of layers, a wiring exploration region may be formed of a plurality of wiring exploration regions. In this case, the PCB data 200 may include position information about in which wiring exploration region among the plurality of wiring exploration regions each net needs to be positioned.

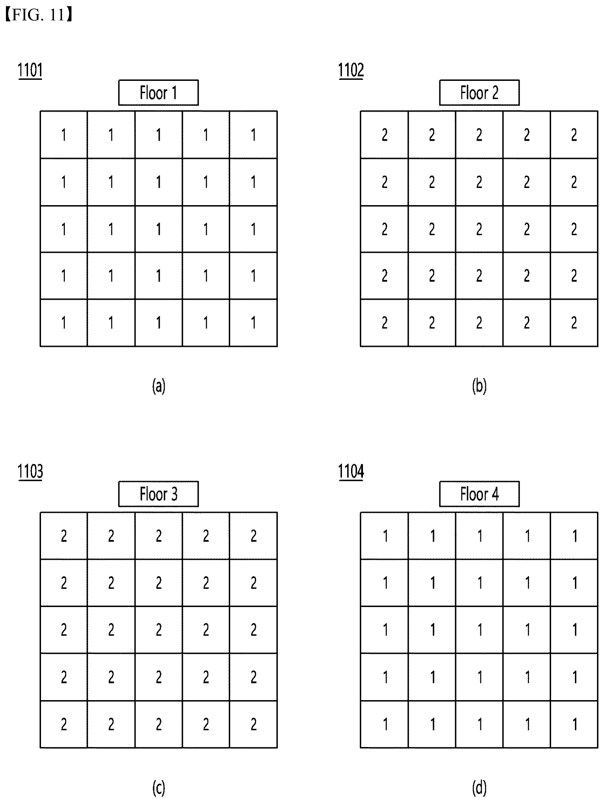

The control unit 150 may perform gridization of the plurality of wiring exploration regions into a plurality of grid cells, based on a preset criterion. For example, as illustrated in (a) to (d) of FIG. 11, the control unit 150 may perform gridization of each of the plurality of wiring exploration regions 1101, 1102, 1103, and 1104 into a plurality of grid cells.

Further, when a specific net needs to be wired in a specific layer among a plurality of layers, the path exploration unit 170 may increase the cost of other remaining layers except for the specific layer, in order to induce wiring to be performed in the specific layer rather than in other layers.

More specifically, to allow for wiring at a specific layer that requires wiring for a specific net, the path exploration unit 170 may set the cost of wiring detection regions, corresponding to layers other than the specific layer and excluding the wiring detection region corresponding to that specific layer, to be high.

When disposing a plurality of terminals into each of the plurality of wiring exploration regions 1101, 1102, 1103, and 1104, the path exploration unit 170 may increase the cost of at least one of the plurality of wiring exploration regions 1101, 1102, 1103, and 1104, based on position information of terminals grouped into respective nets.

Here, increasing the cost of a wiring exploration region may mean that, in a state where the same cost is given to each of the plurality of grid cells included in each of the plurality of wiring exploration regions, when a specific net (e.g., a first net) defined by a net list needs to be positioned in a specific wiring exploration region (e.g., a first wiring exploration region) among the plurality of wiring exploration regions, the cost of grid cells included in other wiring exploration regions (e.g., a second wiring exploration region and a third wiring exploration region) may be increased so that the specific net is not disposed in wiring exploration regions other than the first wiring exploration region among the plurality of wiring exploration regions. For example, as illustrated in (a) to (c) of FIG. 11, the path exploration unit 170 may update the costs of all of the plurality of grid cells included in a second wiring exploration region 1102 and a third wiring exploration region 1103, so that a first net is not disposed in wiring exploration regions other than a first wiring exploration region 1101 (the second wiring exploration region 1102 and the third wiring exploration region 1103) (e.g., update to "2").

In addition, when a plurality of nets (e.g., the first net and the second net) need to be positioned (or disposed) respectively in the first wiring exploration region 1101 and a fourth wiring exploration region 1104 among the plurality of wiring exploration regions 1101, 1102, 1103, and 1104, the path exploration unit 170 may increase the costs of all grid cells included in the remaining wiring exploration regions 1102 and 1103, so that (with respect to the plurality of wiring exploration regions 1101, 1102, 1103, 1104) the first net and the second net are not disposed in wiring exploration regions (i.e., the second and third wiring exploration regions 1102 and 1103) other than the first wiring exploration region 1101 and the fourth wiring exploration region 1104 (e.g., increase to "2").

In an embodiment, it is assumed that, based on the net list 210, the first net needs to be positioned in the first wiring exploration region 1101, and the second net needs to be positioned in the fourth wiring exploration region 1104. The path exploration unit 170 may increase the costs of all grid cells included in remaining wiring exploration regions 1102 and 1103, so that the first terminal T1 and the second terminal T2 grouped into the first net are not disposed in wiring exploration regions (i.e., the second and third wiring exploration regions 1102, 1103) other than the first wiring exploration region 1101 (e.g., increased to "2").

In another embodiment, the path exploration unit 170 may increase the costs of all grid cells included in remaining wiring exploration regions 1102 and 1103, so that the third terminal T3 and the fourth terminal T4 grouped into the second net are not disposed in wiring exploration regions (i.e., the second and third wiring exploration regions 1102, 1103) other than the fourth wiring exploration region 1104 (e.g., increased to "2").

Further, in a state where the cost of the remaining wiring exploration regions 1102 and 1103 is increased, the path exploration unit 170 may dispose each of the plurality of terminals T1, T2, T3, T4, T5, and T6 in at least some of the plurality of grid cells, based on the PCB data 200. For example, the path exploration unit 170 may dispose the first terminal T1 and the second terminal T2 grouped into the first net in the first wiring exploration region 1101, and may dispose the third terminal T3 and the fourth terminal T4 grouped into the second net in the fourth wiring exploration region 1104.

As such, in the present invention, when performing wiring for a PCB composed of a plurality of layers, wiring may be efficiently designed by setting signal disposal or forbidden regions by layer through cost adjustment. That is, in the present invention, by effectively reflecting wiring constraints required for PCB design through cost setting, signal interference may be reduced and a design rule may be satisfied in multi-layer PCB design.

Further, the sampling-based path exploration unit 190 may explore an optimal (or optimized) wiring path that satisfies all preset constraint conditions (e.g., line width, line spacing, wiring forbidden region, 45-degree wiring, etc.), with shortest paths (or wiring paths) for a plurality of terminals explored by the path exploration unit 170 as a guide (S430, see FIG. 4A). Further, the solution derivation unit 195 may derive the explored optimal wiring path as a final solution (S440, see FIG. 4A). The further details will be described below.

Meanwhile, the present invention is directed to providing a sampling-based wiring method and system capable of performing efficient PCB automatic wiring while satisfying all constraint conditions, based on sampling. More specifically, the present invention is directed to providing a sampling-based wiring method and system capable of deriving an optimal wiring path satisfying all constraint conditions, with a wiring path explored based on a grid as a guide, and the following will describe in more detail the sampling-based wiring method.

Meanwhile, before describing a wiring method in a continuous coordinate system according to the present invention, a sampling-based path exploration algorithm (e.g., a rapidly-exploring random tree algorithm (or RRT algorithm)) will be described with reference to FIG. 14.

As illustrated in (a) of FIG. 14, a sampling-based path exploration algorithm samples an arbitrary first point 1401 (or point, node) in an exploration region 1400 (or space). The arbitrary first point 1401 may be a departure point, which is a reference for initiating exploration or generating a new path candidate, and may serve as a basis for expanding a tree. This may be understood as a process of expanding an exploration region 1400 in order to rapidly expand a path to a target point 1410. In this case, in the exploration region 1400, there may exist at least one constraint condition (e.g., obstacle regions 1403a, 1403b, 1403c) that is to be satisfied during the exploration process.

Further, the sampling-based path exploration algorithm specifies (or explores, figures out, etc.) a specific point 1401a existing at the closest position to the arbitrary first point 1401 among points included (or positioned) in an existing tree (i.e., already explored path). This process may be understood as selecting a reference point to depart from an existing point in order to expand the tree. The specific point 1401a is a point that serves as a reference for new connections in the existing tree, and a virtual line segment 1402 (or dotted line) connecting the arbitrary first point 1401 and the specific point 1401a is generated. Based on this line segment 1402, a new candidate point is sampled (or generated, set, etc.) by expanding by a preset distance (or expansion distance) in the subsequent step.

Further, the sampling-based path exploration algorithm designates a point, spaced apart by a preset distance on the line segment 1402 connecting the arbitrary first point 1401 and the specific point 1401a, as a new candidate. As illustrated in (b) of FIG. 14, the sampling-based path exploration algorithm samples a new candidate point 1401b by expanding from the arbitrary first point 1401 toward the specific point 1401a by a preset distance γ.

In this case, the sampling-based path exploration algorithm may determine (or verify) whether the new candidate point 1401b satisfies (no violation of constraint conditions) or does not satisfy (violation of constraint conditions) preset constraint conditions 1403a, 1403b, and 1403c, and based on a result of the determination, may determine whether to add the new candidate point 1401b to the tree.

In an embodiment, as illustrated in (c) of FIG. 14, as a result of the determination, when the new candidate point 1401b satisfies the preset constraint conditions 1403a, 1403b, and 1403c (e.g., the new candidate point 1401b does not invade obstacles or wiring forbidden regions 1403a, 1403b, and 1403c), the sampling-based path exploration algorithm may add the new candidate point 1401b to the tree. That is, when a path of the new candidate point satisfies all constraint conditions (e.g., obstacle avoidance, forbidden region, etc.), it is incorporated into a part of the tree.

In another embodiment, as illustrated in (d) and (e) of FIG. 14, as a result of the determination, when a sampled new candidate point 1401c does not satisfy the preset constraint conditions 1403a, 1403b, and 1403c (e.g., the new candidate point 1401c invades obstacles or wiring forbidden regions 1403a, 1403b, and 1403c), the sampling-based path exploration algorithm may not add the new candidate point 1401c, which does not satisfy the constraint conditions 1403a, 1403b, and 1403c, to the tree, and instead, performs a process of resampling another new candidate point 1401d in the exploration region 1400.

In this case, the resampling process may be repeatedly performed until a valid point satisfying the constraint conditions is found by resampling a new point. More specifically, the resampling process may be repeatedly performed until a path of a resampled new candidate point 1401d satisfies the preset constraint conditions. As a result of the determination for the resampled new candidate point 1401d, when the resampled new candidate point 1401d satisfies the preset constraint conditions 1403a, 1403b, and 1403c, the sampling-based path exploration algorithm may add the resampled new candidate point 1401d to the tree.

That is, the sampling-based path exploration algorithm, as a method of exploring a path in a continuous coordinate system (continuous or continued space), performs a process of i) stochastically (or randomly) sampling an arbitrary first point (node) in a path exploration region, ii) specifying a closest point in an existing path (tree) to the sampled point, and sampling a new candidate point (or new point) on a line segment connecting the specified point and the sampled point, and
iii) expanding the tree toward a target point while exploring an optimal path that satisfies constraint conditions.

Meanwhile, as described above, in a grid-based wiring path exploration method (or process), a process of receiving PCB data including a net list and information on a plurality of terminals, a process of specifying a wiring exploration region for performing wiring of the plurality of terminals based on the net list, a process of performing gridization of the wiring exploration region into a plurality of grid cells based on a preset criterion, a process of updating the cost of the wiring exploration region such that the costs of at least some of the plurality of grid cells are increased based on preset constraint conditions, and a process of exploring shortest paths for wiring the plurality of terminals according to the net list by exploring grid cells with minimized costs in the cost-updated wiring exploration region may be performed.

For example, as illustrated in (b) of FIG. 8, the path exploration unit 170 may, in the cost-updated wiring exploration region 700, explore grid cells with minimized costs, and then explore the first shortest path for wiring the first terminal T1 and the second terminal T2 belonging to the first net according to the net list 210, and the second shortest path for wiring the third terminal T3 and the fourth terminal T4 belonging to the second net. Here, the first shortest path may include grid cells 701, 702, 703, 706, 711, 716, and 721, in which the sum of costs is minimized (e.g., "7.7"), and the second shortest path may include grid cells 705, 710, 715, 720, 723, 724, and 725, in which the sum of costs is minimized (e.g., "7").

Next, in the present invention, in order to perform wiring for the plurality of terminals T1, T2, T3, T4, T5, and T6 in the continuous coordinate system, a process of calculating wiring probabilities of the plurality of grid cells using information of grid cells corresponding to shortest paths may be performed (S1310, see FIG. 13).

The control unit 150 may specify grid cells corresponding to shortest paths explored from the path exploration unit 170.

For example, as illustrated in (b) of FIG. 8, the control unit 150 may specify the grid cells 701, 702, 703, 706, 711, 716, and 721 occupied by the first shortest path explored from the path exploration unit 170, among the plurality of grid cells 701 to 725 included in the wiring exploration region 700, as grid cells corresponding to the first shortest path.

In this case, the grid cells 701, 702, 703, 706, 711, 716, and 721 corresponding to the first shortest path may be understood as grid cells satisfying preset constraint conditions while wiring terminals grouped into the first net (i.e., the first terminal T1 and the second terminal T2) at a minimum cost, according to the net list 210.

In another example, the control unit 150 may specify the grid cells 705, 710, 715, 720, 723, 724, and 725 occupied by the second shortest path explored from the path exploration unit 170, among the plurality of grid cells 701 to 725 included in the wiring exploration region 700, as grid cells corresponding to the second shortest path.

In this case, the grid cells 705, 710, 715, 720, 723, 724, and 725 corresponding to the second shortest path may be understood as grid cells satisfying preset constraint conditions while wiring terminals grouped into the second net (i.e., the third terminal T3 and the fourth terminal T4) at a minimum cost, according to the net list 210.

Such shortest paths (the first shortest path and the second shortest path) and information on grid cells corresponding to the shortest paths (e.g., position information of grid cells, information on cost occupied by the shortest paths, etc.) may be stored in the storage unit (or memory) 140.

Further, the control unit 150 may calculate wiring probabilities of a plurality of grid cells, using information of grid cells corresponding to the shortest paths.

The control unit 150 may calculate (or give, assign) wiring probabilities of respective grid cells among the plurality of grid cells, using the heatmap generation unit 180.

The heatmap generation unit 180 may calculate wiring probability values of other grid cells among the plurality of grid cells, excluding grid cells corresponding to the shortest paths, using information on the grid cells corresponding to the shortest paths.

Specifically, the heatmap generation unit 180 may calculate wiring probabilities of grid cells corresponding to the shortest paths higher than wiring probabilities of other grid cells, among the plurality of grid cells, so that wiring of a plurality of terminals is performed in the continuous coordinate system centered on the grid cells corresponding to the shortest paths.

For example, the heatmap generation unit 180 may calculate probability values of remaining grid cells excluding the grid cells 701, 702, 703, 706, 711, 716, and 721 corresponding to the first shortest path, and the grid cells 705, 710, 715, 720, 723, 724, and 725 corresponding to the second shortest path, as "0.2".

Alternatively, the heatmap generation unit 180 may calculate wiring probability values of grid cells (among the plurality of grid cells) corresponding to the shortest paths higher than wiring probability values of remaining grid cells. For example, the heatmap generation unit 180 may calculate probability values of the grid cells 701, 702, 703, 706, 711, 716, and 721 corresponding to the first shortest path, and probability values of the grid cells 705, 710, 715, 720, 723, 724, and 725 corresponding to the second shortest path, as "0.8", which is higher than probability values (e.g., "0.2") of remaining grid cells.

However, even if grid cells correspond to the shortest paths, the probability values calculated for respective grid cells corresponding to the shortest paths may differ. The heatmap generation unit 180 may calculate respective probability values of grid cells corresponding to shortest paths differently according to respective selection frequencies (or number of selections) of the grid cells corresponding to the shortest paths, in the shortest path exploration step. In this case, selection frequencies of the grid cells may be understood as including all selection frequencies in the initial shortest path exploration step and the shortest path exploration step through re-exploration.

**In** an embodiment, the heatmap generation unit 180 may give different weights according to selection frequencies of respective grid cells corresponding to the shortest paths. The heatmap generation unit 180 may give a highest weight (e.g., a first weight) to at least one grid cell among the grid cells corresponding to the shortest path, which satisfies a preset criterion (e.g., five times or more) of selection frequency. On the other hand, the heatmap generation unit 180 may give a weight (e.g., a second weight) lower than a weight given to grid cells that satisfy the preset criterion, to grid cells that do not satisfy a preset criterion of selection frequency (e.g., less than five times), among grid cells corresponding to the shortest paths. In this case, the heatmap generation unit 180 may calculate a probability value of a grid cell to which the first weight is given as "0.95", and may calculate a probability value of a grid cell to which the second weight is given as "0.8", which is lower than the probability value of the grid cell to which the first weight is given, based on the different weights given to the respective grid cells corresponding to the shortest paths. However, in the present invention, weights given to grid cells are not necessarily limited to the mentioned weights (the first weight and the second weight), and may further include various weights (e.g., a third weight, a fourth weight, etc.) according to a preset criterion. Further, the preset criterion (or preset weighting criterion) is not necessarily limited thereto, and it is obvious that it may be variously changed by an administrator of the wiring system 100 or by the wiring system 100 itself.

Meanwhile, based on wiring probabilities (or probability values) calculated for each of a plurality of grid cells, visual appearances of each of the plurality of grid cells may be displayed differently. Such data in which this information is displayed may be referred to as a "heatmap".

The heatmap generation unit 180 may convert a wiring exploration region into a heatmap. In this case, the heatmap generation unit 180 may assign a probability value to each of the plurality of grid cells included in the wiring exploration region, and may generate a heatmap, using the probability values assigned to each of the plurality of grid cells.

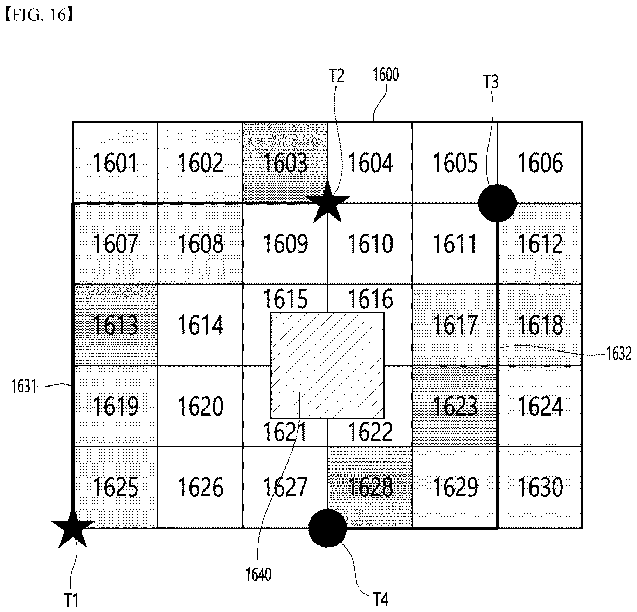

As illustrated in FIG. 16, the heatmap generation unit 180 may assign a first probability value (e.g., "0.95") to at least one grid cell 1603 and 1613 among grid cells 1601, 1602, 1603, 1607, 1608, 1613, 1619, and 1625 corresponding to a first shortest path to which a first weight is given, and at least one grid cell 1623 and 1628 among grid cells 1612, 1617, 1618, 1623, 1624, 1628, 1629, and 1630 corresponding to a second shortest path to which a first weight is given.

In addition, the heatmap generation unit 180 may assign a second probability value (e.g., "0.8") to the grid cells 1601, 1602, 1607, 1608, 1619, and 1625 among the grid cells 1601, 1602, 1603, 1607, 1608, 1613, 1619, and 1625 corresponding to the first shortest path to which a second weight is given, and the grid cells 1612, 1617, 1618, 1624, 1629, and 1630 among the grid cells 1612, 1617, 1618, 1623, 1624, 1628, 1629, and 1630 corresponding to the second shortest path to which a second weight is given.

Further, the heatmap generation unit 180 may assign a third probability value (e.g., "0.2") to remaining grid cells 1604, 1605, 1606, 1609, 1610, 1611, 1614, 1615, 1616, 1620, 1621, 1622, 1626, and 1627 excluding grid cells corresponding to the shortest paths (i.e., to which a third weight is given).

That is, the heatmap generation unit 180 may generate a heatmap 1600, using probability values (e.g., a first probability value, a second probability value, a third probability value, etc.) assigned to each of the plurality of grid cells 1601 to 1630.

Such a heatmap 1600 may be defined as different regions according to probability values assigned to each of the plurality of grid cells 1601 to 1630.

First, the grid cells 1603, 1613, 1623, and 1628, to which the first probability value, which is the highest probability value in the present invention, is given, may be defined as hot cells. For example, the hot cells may be regions having high importance or value (e.g., cells with high sampling probability) in the heatmap 1600, and may be displayed in red or intense colors. The hot cells may correspond to a shortest path explored through the path exploration unit 170, or may be cells adjacent to the shortest path.

Next, the grid cells 1601, 1602, 1607, 1608, 1612, 1617, 1618, 1619, 1624, 1625, 1629, and 1630, to which the second probability value lower than the first probability value in the present invention is given, may be defined as medium cells. For example, the medium cells may be cells with medium importance, and in the heatmap 1600, the medium cells may be displayed in a medium brightness color lighter than the hot cells (e.g., orange, light brown, etc.).

**In** addition, in the present invention, cells occupied by a shortest path explored from the path exploration unit 170 may also be defined as path cells. For example, in order to visually emphasize a wiring path, the path cells may be displayed in a color (e.g., yellow) different from the hot cells and medium cells on the heatmap 1600.

Further, the grid cells 1604, 1605, 1606, 1609, 1610, 1611, 1614, 1615, 1616, 1620, 1621, 1622, 1626, and 1627, to which the third probability value lower than the first probability value and the second probability value in the present invention is given, may be defined as cold cells. For example, the cold cells may be regions having low importance or probability value, and in the heatmap 1600, the cold cells may be displayed in a blue color or a color lighter (weaker) than the hot cells or medium cells.

**In** this case, among the grid cells 1604, 1605, 1606, 1609, 1610, 1611, 1614, 1615, 1616, 1620, 1621, 1622, 1626, and 1627, to which the third probability value is given, the cells 1615, 1616, 1621, and 1622, corresponding to regions where wiring is impossible, may be defined as obstacle cells. For example, the obstacle cells may visually represent regions where wiring is impossible, and in the heatmap 1600, the obstacle cells may be displayed in a filled grid pattern or a fixed specific color (e.g., red).

Further, as illustrated in FIG. 16, the plurality of grid cells 1601 to 1630 of the heatmap 1600 may include a first wiring 1601 connecting the first terminal T1 and the second terminal T2 specified as a final wiring, and a second wiring 1602 connecting the third terminal T3 and the fourth terminal T4. In this case, the first wiring 1601 and the second wiring 1602 may also be understood as final wiring paths finally specified according to the shortest paths explored from the path exploration unit 170, as described above (see (a) of FIG. 7 and (b) of FIG. 8).

Meanwhile, each of the plurality of grid cells 1601 to 1630 included in the heatmap 1600 may be displayed with a different visual appearance according to a wiring probability calculated for each of the plurality of grid cells.

For example, as illustrated in FIG. 16, among the grid cells 1601, 1602, 1603, 1607, 1608, 1613, 1619, and 1625 corresponding to the first shortest path, the hot cells 1603 and 1613 to which a first weight is given may be displayed with a first visual appearance (e.g., a dark color). In contrast, the medium cells 1601, 1602, 1607, 1608, 1619, and 1625, to which a second weight other than the first weight is given, may be displayed with a second visual appearance (e.g., a light color) different from the first visual appearance.

In another example, among the grid cells 1612, 1617, 1618, 1623, 1624, 1628, 1629, and 1630 corresponding to the second shortest path, the hot cells 1623 and 1628 to which a first weight is given may be displayed with the first visual appearance (e.g., a dark color). In contrast, the medium cells 1612, 1617, 1618, 1624, 1629, and 1630, to which a second weight other than the first weight is given, may be displayed with a second visual appearance (e.g., a light color) different from the first visual appearance.

In another example, the cold cells 1604, 1605, 1606, 1609, 1610, 1611, 1614, 1615, 1616, 1620, 1621, 1622, 1626, and 1627, which are other than grid cells corresponding to a shortest path (i.e., to which a third weight is given), may be displayed with a third visual appearance (e.g., a lighter color than the hot cells and medium cells) different from the first visual appearance and the second visual appearance.

Through this, in the present invention, it is possible to reduce unnecessary exploration by increasing sampling probability around a path explored based on a grid, and to induce rapid convergence by focusing on a zone with a high possibility of path generation. This allows a subsequent sampling-based exploration process to proceed more efficiently and enables a path satisfying constraint conditions to be explored quickly.

Further, in the present invention, a user may more intuitively recognize important data for optimal wiring path selection and layer-specific wiring plan establishment through a heatmap. Through this, the user may solve complex wiring problems in the PCB design process, and reduce time and cost occurring in the PCB wiring design process.

Meanwhile, in the present invention, a process of performing wiring of a plurality of terminals according to a net list in a continuous coordinate system, using wiring probabilities of a plurality of grid cells may proceed (see S1320, FIG. 13).

The control unit 150 may explore an optimal wiring path satisfying preset constraint conditions based on the heatmap 1600.

Specifically, the control unit 150 may explore an optimal wiring path connecting the plurality of terminals T1, T2, T3, T4, T5, and T6, while satisfying all constraint conditions, using the sampling-based path exploration unit 190.

The sampling-based path exploration unit 190 may explore an optimal wiring path for wiring the plurality of terminals T1, T2, T3, T4, T5, and T6 in the continuous coordinate system based on the heatmap 1600.

As described above, points sampled in the continuous coordinate system by the sampling-based path exploration unit 190 may be probabilistically distributed around a shortest path explored from the path exploration unit 170.

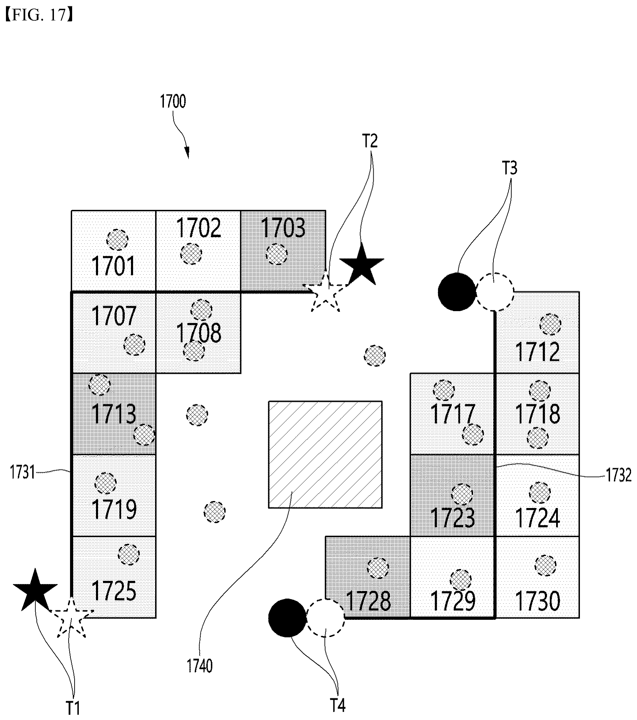

As illustrated in FIG. 17, points sampled on a continuous coordinate system 1700 may be probabilistically distributed in regions 1701, 1702, 1703, 1706, 1707, 1712, 1713, 1717, 1718, 1719, 1723, 1724, 1725, 1728, 1729, and 1730 around a first shortest path 1731 and a second shortest path 1732. In this case, on the continuous coordinate system 1700, distribution probabilities of points sampled in regions 1701, 1702, 1703, 1706, 1707, 1712, 1713, 1717, 1718, 1719, 1723, 1724, 1725, 1728, 1729, and 1730 around the first shortest path 1731 may exist differently for each region according to wiring probabilities calculated above. For example, in regions 1703, 1713, 1723, and 1728 corresponding to grid cells for which a wiring probability is calculated as "0.95", distribution probability of sampled points may be highest, and in regions 1706, 1707, 1712, 1717, 1718, 1719, 1724, 1725, 1729, and 1730 corresponding to grid cells for which a wiring probability is calculated as "0.8", distribution probability of sampled points may be smaller than that of the regions 1703, 1713, 1723, and 1728.

Meanwhile, in the present invention, when a new point (or node) expanded from an existing tree is added to the tree, a cost of each of a plurality of paths may be compared, and among the plurality of paths, a path having a minimum cost may be selected to optimize the tree.

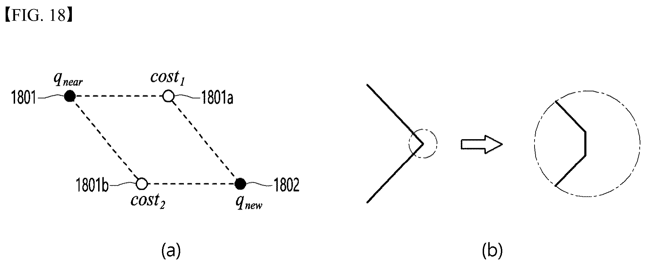

As illustrated in (a) of FIG. 18, the sampling-based path exploration unit 190 may sample a new point 1802 by expanding from a departure point 1801 by a preset distance.

In this case, the sampling-based path exploration unit 190, in order to explore a path connecting (or wiring) the departure point 1801 and the new point 1802 while satisfying a specific constraint condition(s) (e.g., 45-degree angle), may sample a plurality of points 1801a and 1801b connecting the departure point 1801 and the new point 1802 to satisfy the specific constraint condition(s).

The sampling-based path exploration unit 190 may perform reconnecting (rewiring) for optimizing the tree. More specifically, when the new point 1802 is added, the sampling-based path exploration unit 190 may sample the plurality of points 1801a and 1801b connecting the departure point 1801 and the new point 1802 to satisfy a specific constraint condition, and may connect the departure point 1801 and the new point 1802 to each of the plurality of points 1801a and 1801b. For example, the sampling-based path exploration unit 190 may generate a first path connecting the departure point 1801 and the new point 1802 to a first point 1801a, and a second path connecting the departure point 1801 and the new point 1802 to a second point 1801b.

Further, the sampling-based path exploration unit 190 may compare costs of each of the plurality of paths 1801a and 1801b, and may specify a path with a minimized cost among the plurality of paths. For example, it is assumed that among the plurality of paths, a first path has a cost of "2", and a second path has a cost of "2.2". The sampling-based path exploration unit 190 may specify the first path that may wire (or connect) the departure point 1801 and the new point 1802 at a minimum cost, and may newly sample the first point 1801a included in the specified first path and add it to the existing tree. That is, the sampling-based path exploration unit 190 may reconstruct the tree with a path with a minimized cost, and may progressively explore an optimal path by repeating such a process.

Further, as illustrated in (b) of FIG. 18, when connecting a wiring path, a sharp path may occur where the path takes a sharp turn. This may be understood as a phenomenon that occurs when a specific constraint condition(s) is not satisfied (or not complied with). However, in the present invention, by setting the path to be connected while satisfying the specific constraint condition(s), during the process of connecting the path, the sharp path may be converted (or corrected, modified, etc.) into a path that satisfies the specific constraint condition(s).

That is, the sampling-based path exploration unit 190 may continuously minimize the cost of a path through rewiring, explore an optimized path, and, while expanding a tree so as to satisfy both a specific constraint condition(s) and other constraint conditions different from the specific constraint condition(s), may gradually explore an optimal path.

Based on the above-described contents, hereinafter, a more detailed description will be given regarding a method of performing wiring of a plurality of terminals in a continuous coordinate system according to a net list.

The process of performing wiring of a plurality of terminals in a continuous coordinate system may include a process of constructing a wiring tree centered on points that satisfy constraint conditions among points specified through sampling, and completing the wiring of the plurality of terminals using the wiring tree.

First, a description will be given of a process of performing wiring in a continuous coordinate system of the first terminal T1 and the second terminal T2 belonging to a first net among the plurality of terminals T1, T2, T3, T4, T5, and T6.

The sampling-based path exploration unit 190 may perform sampling of points to be included in the wiring of the plurality of terminals, centered on a region having a high probability value among the wiring exploration region defined by the heatmap 1600. Here, performing sampling centered on the region having a high probability value may be understood as performing sampling centered on a hot cell to which a first probability value is assigned, or on a path cell. Alternatively, it may also be understood as performing sampling centered on a medium cell to which a second probability value is assigned.

The sampling-based path exploration unit 190 may set the first terminal T1 as a start point, and set the second terminal T2, which is different from the first terminal T1 among the terminals T1 and T2 grouped into the first net, as a target point.

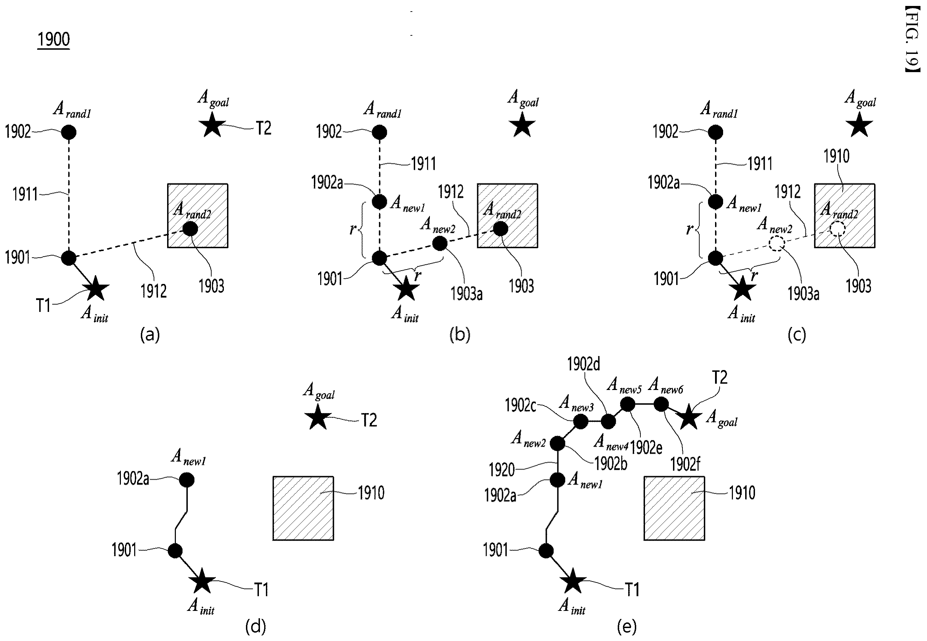

As illustrated in (a) of FIG. 19, the sampling-based path exploration unit 190 may sample an arbitrary first point 1901 corresponding to the starting point on a continuous coordinate system 1900, in order to explore an optimal path for wiring the first terminal T1 and the second terminal T2.

The arbitrary first point 1901 may be a point positioned in a region (or cell) on the heatmap 1600 having a high probability value (e.g., a hot cell or a path cell to which a first probability value is assigned), from a point at which the first terminal T1 among the terminals T1 and T2 grouped as a first net defined by a net list is positioned.

In addition, the sampling-based path exploration unit 190 may sample the arbitrary first point 1901 on the continuous coordinate system 1900 based on a preset criterion. In the present invention, the preset criterion by which the arbitrary first point is sampled may exist in various forms. For example, the preset criterion may include at least one of i) a distance smaller than a grid cell size (e.g., length) of a grid, ii) a distance shorter than a preset distance y, iii) a position closest to a node (starting terminal) from which wiring starts, among nodes in an existing tree (shortest path explored from the path exploration unit 170), iv) a position from which a path satisfying a specific constraint condition(s) (e.g., 45-degree angle) may be explored, or v) a position from which a path that does not violate a preset constraint condition(s) (e.g., wiring forbidden zone, conflict zone, etc.) may be explored. However, in the present invention, the preset criterion is not necessarily limited thereto, and it is obvious that it may be variously set (or modified) by an administrator (or user, engineer, etc.) of the wiring system 100 or by the wiring system 100 itself.

Further, the sampling-based path exploration unit 190 may specify a second point, spaced apart from the first point 1901 by a preset distance, among regions having high probability values defined by the heatmap 1600, as a wiring candidate point.

The sampling-based path exploration unit 190 may specify a plurality of reference points 1902 and 1903 among the points included in the existing tree in order to connect the first point 1901 such that a specific constraint condition(s) is satisfied. The sampling-based path exploration unit 190 may sample the specified plurality of reference points 1902 and 1903 on the continuous coordinate system 1900. In this case, each of the plurality of reference points 1902 and 1903 may be understood as a point that serves as a reference for exploring a path in consideration of a specific constraint condition(s).

The sampling-based path exploration unit 190 may generate paths that respectively connect the first point 1901 to the plurality of reference points 1902 and 1903. For example, the sampling-based path exploration unit 190 may generate a first path 1911 that connects a first reference point 1902 and the first point 1901, and a second path 1912 that connects a second reference point 1903 and the first point 1901, among a plurality of candidate points 1902 and 1903.

Here, the sampling-based path exploration unit 190 may specify, on each of a plurality of paths 1911 and 1912 connecting the first point 1901 and the plurality of reference points 1902 and 1903, a point spaced (or separated) by a preset distance as a new wiring candidate point. As illustrated in (b) of FIG. 19, the sampling-based path exploration unit 190 may specify a point 1902a, spaced apart by a preset distance γ on the first path 1911, as a new first candidate point, and may specify a point 1903a, spaced apart by the preset distance on the second path 1912, as a new second candidate point.

The sampling-based path exploration unit 190 may sample a plurality of candidate points (or wiring candidate points, 1902a and 1903a) on the continuous coordinate system 1900. In this case, the sampling-based path exploration unit 190, using a verification unit 191, may determine (or verify) whether each of the new plurality of candidate points 1902a and 1903a satisfies or does not satisfy the preset constraint condition, and depending on whether each of the plurality of candidate points 1902a and 1903a satisfies the preset constraint condition(s), may perform different wiring processes.

Here, the different wiring process may include a first wiring process in which, when one of the plurality of candidate points satisfies the constraint condition(s), the candidate point satisfying the constraint condition(s) is included in the wiring tree of the first net, and a new wiring candidate point spaced apart by the preset distance from the candidate point is sampled.

In contrast, the different wiring process may include a second wiring process in which, when none of the plurality of candidate points satisfies the constraint condition(s), the candidate point not satisfying the constraint condition(s) is not included in the wiring tree of the first net, and a new wiring candidate point spaced apart by the preset distance from the candidate point is sampled.

Accordingly, under the condition where the first terminal T1 is set as a start point and the second terminal T2, which is different from the first terminal T1, among the terminals T1 and T2 grouped in the first net, is set as a target point, the sampling-based path exploration unit 190 may repeatedly perform at least one of the first wiring process or the second wiring process until a wiring tree of the first net continuing from the start point to the target point is constructed, centered on the region having a high probability value defined by heatmap 1600.

For example, as illustrated in (c) of FIG. 19, as a result of the determination, the sampling-based path exploration unit 190, based on the first candidate point 1902a among the plurality of candidate points 1902a and 1903a satisfying the preset constraint condition(s) (e.g., the first candidate point 1902a does not invade the wiring forbidden region 1910), may perform the first wiring process of adding the first candidate point 1902a to the wiring tree of the first net, and sampling a new wiring candidate point 1902b spaced apart by the preset distance from the first candidate point 1902a.

That is, the sampling-based path exploration unit 190 may allow the first candidate point 1902a to be included as a second point in the wiring tree of the first net, and may sample a new candidate point 1902b spaced apart by the preset distance from the second point 1902a.

In contrast, as a result of the determination, the sampling-based path exploration unit 190, based on the second candidate point 1903a among the plurality of candidate points 1902a and 1903a not satisfying the preset constraint condition(s) (e.g., the second candidate point 1903a invades the wiring forbidden region 1910), may perform the second wiring process of resampling a new wiring candidate point spaced apart by the preset distance from the first point 1901, without allowing the second candidate point 1903a to be included in the wiring tree of the first net.

That is, the sampling-based path exploration unit 190 may sample a new wiring candidate point spaced apart by a preset distance from the first point 1901, without allowing the second candidate point (or second point) to be included in the wiring tree of the first net, when the second candidate point does not satisfy the preset constraint condition(s).

Further, the sampling-based path exploration unit 190 may repeatedly perform the above-described process (first wiring process or second wiring process) to explore an optimal path for wiring the first terminal T1 and the second terminal T2.

In this case, the sampling-based path exploration unit 190 may switch the direction of a connection path in at least a portion between the first point 1901 and the second point 1902a, such that the connection path connecting the first point 1901 and the second point 1902a satisfies a constraint condition(s) (e.g., a 45-degree angle), when the second point 1902a is included in the wiring tree of the first net.

In this case, in the wiring tree of the first net, the direction of the connection path may be switched from a first direction to a second direction, and the angle between the first direction and the second direction may form 45 degrees.

That is, the sampling-based path exploration unit 190 may connect at least one candidate point added to the existing tree in consideration of the constraint condition(s). As illustrated in (d) and (e) of FIG. 19, the sampling-based path exploration unit 190 may connect a plurality of candidate points (e.g., 1902a, 1902b, 1902c, 1902d, 1902e, 1902f, etc.) added to the existing tree, to a path satisfying the constraint condition(s).

Finally, the sampling-based path exploration unit 190 may explore (or generate) an optimal wiring path 2020 that wires the first terminal T1 and the second terminal T2 while satisfying all constraint conditions.

Next, a process of performing wiring of the third terminal T3 and the fourth terminal T4, which belong to the second net, among the plurality of terminals T1, T2, T3, T4, T5, and T6, in the continuous coordinate system, will be described.

The sampling-based path exploration unit 190 may perform sampling of points to be included in the wiring of the plurality of terminals, centered on a region having a high probability value among the wiring exploration region defined by the heatmap 1600. Here, performing sampling centered on the region having a high probability value may be understood as performing sampling centered on a hot cell to which a first probability value is assigned, or on a path cell. Alternatively, it may also be understood as performing sampling centered on a medium cell to which a second probability value is assigned.

The sampling-based path exploration unit 190 may set the third terminal T3 as a start point, and set the fourth terminal T4, which is different from the third terminal T3 among the terminals T3 and T4 grouped into the second net, as a target point.

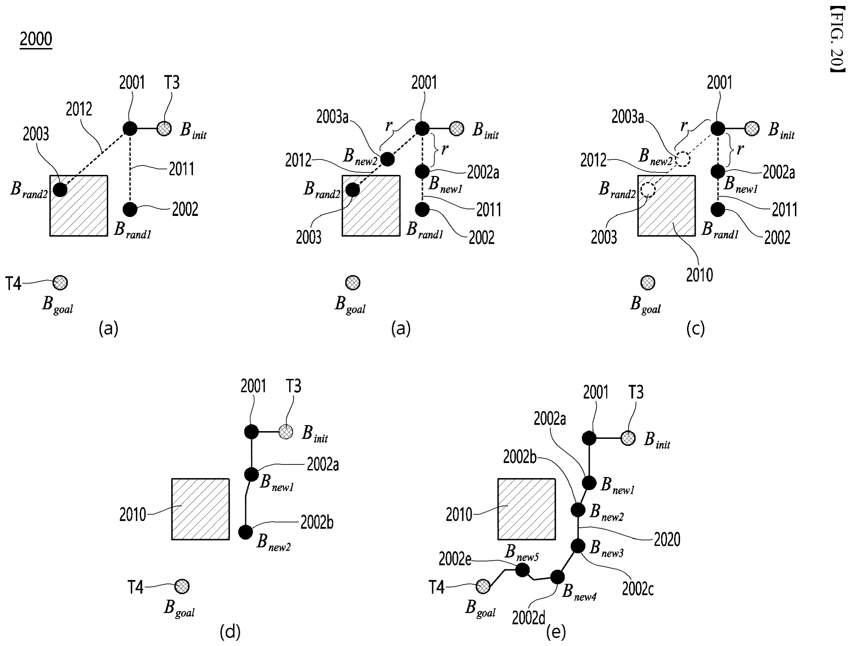

As illustrated in (a) of FIG. 20, the sampling-based path exploration unit 190 may sample an arbitrary first point 2001 corresponding to the starting point on a continuous coordinate system 2000, in order to explore an optimal path for wiring the third terminal T3 and the fourth terminal T4.

The arbitrary first point 2001 may be a point positioned in a region (or cell) on the heatmap 1600 having a high probability value (e.g., a hot cell or a path cell to which a first probability value is assigned), from a point at which the third terminal T3 among the terminals T3 and T4 grouped as the second net defined by a net list is positioned.

Further, the sampling-based path exploration unit 190 may specify a second point, spaced apart from the first point 2001 by a preset distance, among regions having high probability values defined by the heatmap 1600, as a wiring candidate point.

The sampling-based path exploration unit 190 may specify a plurality of reference points 2002 and 2003 among the points included in the existing tree (the wiring tree of the second net) in order to connect the first point 2001 such that a specific constraint condition(s) is satisfied. The sampling-based path exploration unit 190 may sample the specified plurality of reference points 2002 and 2003 on the continuous coordinate system 2000. In this case, each of the plurality of reference points 2002 and 2003 may be understood as a point that serves as a reference for exploring a path in consideration of a specific constraint condition(s).

The sampling-based path exploration unit 190 may generate paths that respectively connect the first point 2001 to the plurality of reference points 2002 and 2003. For example, the sampling-based path exploration unit 190 may generate a first path 2011 that connects a first reference point 2002 and the first point 2001, and a second path 2012 that connects a second reference point 2003 and the first point 2001, among a plurality of candidate points 2002 and 2003.

Here, the sampling-based path exploration unit 190 may specify, on each of a plurality of paths 2011 and 2012 connecting the first point 2001 and the plurality of reference points 2002 and 2003, a point spaced (or separated) by a preset distance as a new wiring candidate point. As illustrated in (b) of FIG. 20, the sampling-based path exploration unit 190 may specify a point 2002a, spaced apart by a preset distance γ on the first path 2011, as a new first candidate point, and may specify a point 2003a, spaced apart by the preset distance on the second path 2012, as a new second candidate point.

The sampling-based path exploration unit 190 may sample a plurality of candidate points (or wiring candidate points, 2002a and 2003a) on the continuous coordinate system 2000. In this case, the sampling-based path exploration unit 190, using a verification unit 191, may determine (or verify) whether each of the new plurality of candidate points 2002a and 2003a satisfies or does not satisfy the preset constraint condition, and depending on whether each of the plurality of candidate points 2002a and 2003a satisfies the preset constraint condition, may perform different wiring processes.

Here, the different wiring process may include a first wiring process in which, when one of the plurality of candidate points satisfies the constraint condition(s), the candidate point satisfying the constraint condition(s) is included in the wiring tree of the second net, and a new wiring candidate point spaced apart by the preset distance from the candidate point is sampled.

In contrast, the different wiring process may include a second wiring process in which, when none of the plurality of candidate points satisfies the constraint condition(s), the candidate point not satisfying the constraint condition(s) is not included in the wiring tree of the second net, and a new wiring candidate point spaced apart by the preset distance from the candidate point is sampled.

Accordingly, under the condition where the third terminal T3 is set as a start point and the fourth terminal T4, which is different from the third terminal T3, among the terminals T3 and T4 grouped in the second net, is set as a target point, the sampling-based path exploration unit 190 may repeatedly perform at least one of the first wiring process or the second wiring process until a wiring tree of the second net continuing from the start point to the target point is constructed, centered on the region having a high probability value defined by heatmap 1600.

For example, as illustrated in (c) of FIG. 20, as a result of the determination, the sampling-based path exploration unit 190, based on the first candidate point 2002a among the plurality of candidate points 2002a and 2003a satisfying the preset constraint condition(s) (e.g., the first candidate point 2002a does not invade the wiring forbidden region 2010), may perform the first wiring process of adding the first candidate point 2002a to the wiring tree of the second net, and sampling a new wiring candidate point 2002b spaced apart by the preset distance from the first candidate point 2002a.

That is, the sampling-based path exploration unit 190 may allow the first candidate point 2002a to be included as a second point in the wiring tree of the second net, and may sample a new candidate point 2002b spaced apart by the preset distance from the second point 2002a.

In contrast, as a result of the determination, the sampling-based path exploration unit 190, based on the second candidate point 2003a among the plurality of candidate points 2002a and 2003a not satisfying the preset constraint condition(s) (e.g., the second candidate point 2003a invades the wiring forbidden region 2010), may perform the second wiring process of resampling a new wiring candidate point spaced apart by the preset distance from the first point 2001, without allowing the second candidate point 2003a to be included in the wiring tree of the second net.

That is, the sampling-based path exploration unit 190 may sample a new wiring candidate point spaced apart by a preset distance from the first point 2001, without allowing the second candidate point (or second point) to be included in the wiring tree of the second net, when the second candidate point does not satisfy the preset constraint condition(s).

Further, the sampling-based path exploration unit 190 may repeatedly perform the above-described process (first wiring process or second wiring process) to explore an optimal path for wiring the third terminal T3 and the fourth terminal T4.

In this case, the sampling-based path exploration unit 190 may switch the direction of a connection path in at least a portion between the first point 2001 and the second point 2002a, such that the connection path connecting the first point 2001 and the second point 2002a satisfies a constraint condition(s) (e.g., a 45-degree angle), when the second point 2002a is included in the wiring tree of the second net.

In this case, in the wiring tree of the second net, the direction of the connection path may be switched from a first direction to a second direction, and the angle between the first direction and the second direction may form 45 degrees.

That is, the sampling-based path exploration unit 190 may connect at least one candidate point added to the existing tree in consideration of the constraint condition. As illustrated in (d) and (e) of FIG. 20, the sampling-based path exploration unit 190 may connect a plurality of candidate points (e.g., 2002a, 2002b, 2002c, 2002d, 2002e, etc.) added to the existing tree, to a path satisfying the constraint condition(s).

Finally, the sampling-based path exploration unit 190 may explore (or generate) an optimal wiring path 2020 that wires the third terminal T3 and the fourth terminal T4 while satisfying all constraint conditions.

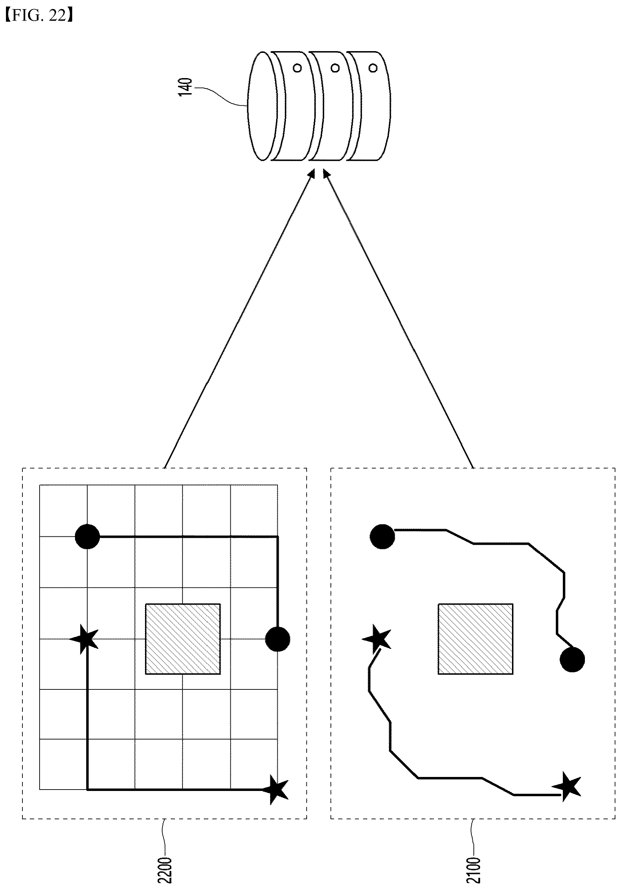

Further, as illustrated in FIG. 22, the control unit 150 may store solutions 2100 and 2200 derived from the solution derivation unit in the storage unit 140. The control unit 150 may store a first solution 2200 derived based on a shortest path explored through the path exploration unit 170, and a second solution 2100 derived based on an optimal path explored through the sampling-based path exploration unit 190, in the storage unit 140. As an example, a space where solutions are stored in the storage unit 140 may also be referred to as a solution pool. In the present invention, all paths (or solutions) explored (or discovered) in the path exploration process are stored in the storage unit 140, and when a path that does not satisfy a constraint condition(s) is explored during a subsequent path exploration, at least one alternative path may be used to satisfy the constraint condition(s), using at least one path stored in the storage unit 140.

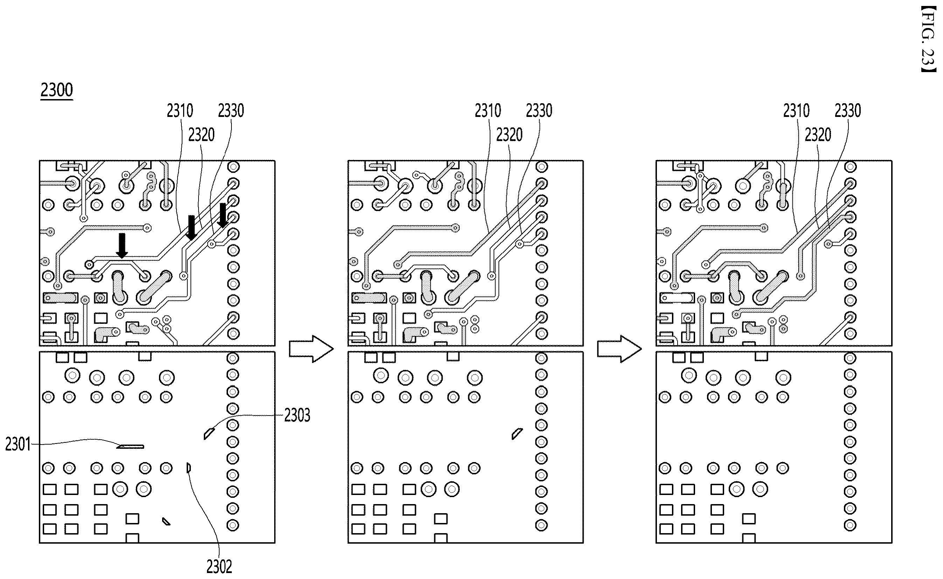

Furthermore, as illustrated in FIG. 23, when connecting a single net (wiring group), a conflict phenomenon may occur. In this case, the control unit 150 may increase the cost of a conflict region, and guide the next process to explore a path that avoids the corresponding region. For example, when exploring a wiring path that satisfies a specific constraint condition(s) (e.g., 45 degrees), in case where a conflict occurs among a first net 2310, a second net 2320, and a third net 2330, the control unit 150 may increase the cost of conflict points 2301, 2302, and 2303 of the first net 2310, the second net 2320, and the third net 2330, and may guide the first net 2310, the second net 2320, and the third net 2330 to bypass the corresponding points during respective next wiring exploration processes. Through this, an optimized wiring path that satisfies all constraint conditions may be generated for each of the first net 2310, the second net 2320, and the third net 2330.

Meanwhile, as described above, the wiring system 100 may interoperate with the agent server AS and may provide various services or functions provided in the present invention to a user. The wiring system 100 may also include at least one agent (e.g., artificial intelligence agent (AI agent)). Further, the agent server may be configured to be included in the wiring system 100 according to the present invention.

In the present invention, the agent may interact with a user through a chatbot (or conversational artificial intelligence, conversational agent, etc.) interoperating with the wiring system 100. In this case, at least one of the main agent or a sub-agent may be implemented in the form of a chatbot. For example, when the main agent interacts with a user, the main agent may receive a user input through the chatbot, or may provide information (or data) to the user through the chatbot. However, in the present invention, it is apparent that the implementation form of the chatbot is merely an example, and may be implemented in various forms beyond the chatbot.

First, in the present invention, in the agent, a process of receiving PCB wiring target information through a conversation of the user meditated by the user terminal 10 may be performed. The agent may provide to the user terminal 10 a question related to PCB data so that printed circuit board (PCB) data including a net list (Net list) and information on a plurality of terminals is specified, and may specify the PCB data based on an answer received from the user terminal 10. Further, the agent may specify target information based on the specified PCB data.

For example, as illustrated in (a) of FIG. 24, in order to receive a user input corresponding to a PCB wiring target, the agent may provide guidance information (e.g., "Hello user :) I am an agent who will assist your PCB design. How may I help you?", 2401) to the user terminal 10 through the chatbot 2400 interoperating with the wiring system 100.

Further, the agent may receive PCB data input from the user terminal 10 (S451, see FIG. 4B). For example, in a certain region of the user terminal 10 (or a service page) where the chatbot 2400 is provided, a region for receiving a user input (or input receiving region, 2410) may be provided. This input receiving region 2410 may include at least one of a text input region configured to receive a user's text input in text form, a graphical object (or a first graphical object, 2410a) linked to a function of receiving data in an image (or video) format, a graphical object (or a second graphical object, 2410b) linked to a function of receiving data in file format (e.g., XML, JSON, YAML, Gerber, ODB, CAD file, etc.), or a graphical object (or a third graphical object, 2410c) linked to a user input receiving function.

The agent may receive PCB data 2402 corresponding to a user input from the user terminal 10, based on a selection of the third graphical object 2410c included in the input receiving region 2410. The PCB data 2402 may include, for example, at least one of an image (circuit diagram, 2402a) of a specific PCB that a user wants to design, or text data requesting design (or wiring path exploration) of the specific PCB (e.g., "I want to add terminals at the displayed point and wire them, please find a path satisfying a 45-degree angle without conflicting with the wiring of other terminals", 2402b). The text data 2402b may include information related to at least one of a net list, a plurality of terminals, or a constraint condition.

Next, the agent may transmit the PCB data 2402 received through the chatbot 2400 to the agent server AS. The agent server AS may perform an analysis for the PCB data 2402 (S453, see FIG. 4B), and based on an analysis result, may extract at least one of net group information, position information for each of a plurality of terminals, or a constraint condition(s).

In this case, the agent server AS may specify target information based on the PCB data 2402. Further, the agent server AS may generate a task plan based on PCB wiring target information. The agent, according to the task plan, may cooperate with at least one of the data parsing unit 160, the path exploration unit 170, the heatmap generation unit 180, the sampling-based path exploration unit 190, or the solution derivation unit 195 of the wiring system 100, to perform wiring according to PCB wiring target information. Such an agent may include a main agent generating the task plan, and a plurality of sub-agents cooperating with the main agent and respectively interoperating with one of the data parsing unit 160, the path exploration unit 170, the heatmap generation unit 180, the sampling-based path exploration unit 190, or the solution derivation unit 195.

Further, the main agent, according to the task plan, may deliver a task command to at least one of the plurality of sub-agents, and at least one sub-agent receiving the task command may perform, in accordance with the task command, wiring design according to PCB wiring target information.

More specifically, the agent server AS may select (or specify) each agent for "wiring new terminals at specific positions 2403a and 2403b with optimal paths that do not conflict with the wiring of other terminals and satisfy a 45-degree angle" among a plurality of agents A1, A2, and A3. For example, the agent server AS, based on the PCB data 2402, may select a first agent A1, a second agent A2, and a third agent A3 among a plurality of agents (or sub-agents, A1, A2, A3) having different specialized functions, to wire a plurality of terminals satisfying user-input constraint conditions (e.g., wiring crossing forbidden, 45-degree angle, etc.) at specific positions 2403a and 2403b (S455, see FIG. 4B).

In this case, each of the selected plurality of agents A1, A2, and A3 may understand a user intention included in the PCB data 2402, and may perform customized wiring according to the user intention (S457, see FIG. 4B).

In the present invention, each of the selected plurality of agents A1, A2, and A3 according to a task plan may specify grid cells corresponding to a shortest path satisfying a preset constraint condition(s) among a plurality of grid cells forming a wiring exploration region based on target information, generate a heatmap reflecting a wiring probability value for each of the plurality of grid cells, using information on the grid cells corresponding to the shortest path, perform wiring design according to PCB wiring target information in a continuous coordinate system based on the probability value defined by the heatmap, and provide a wiring result in the continuous coordinate system to a user terminal.

In an embodiment, the first agent A1 may, based on the PCB data 2402, i) specify a wiring exploration region for wiring terminals to specific positions 2403a and 2403b, ii) perform gridization of the wiring exploration region into a plurality of grid cells based on a preset criterion, iii) dispose new plurality of terminals respectively in grid cells corresponding to the specific positions 2403a and 2403b among the plurality of grid cells, and iv) explore a shortest path for wiring the plurality of terminals independently of constraint conditions in a state where the plurality of terminals are disposed in the wiring exploration region.

In another embodiment, based on a result of wiring the plurality of terminals according to the shortest path explored by the first agent A1, the second agent A2 may i) specify a grid cell that does not satisfy a specific constraint condition(s) (e.g., wiring crossing forbidden) among the plurality of grid cells, ii) update the cost of the wiring exploration region so that the cost of the specified grid cell is increased, and iii) re-explore a shortest path for wiring the plurality of terminals at a minimum cost while satisfying the specific constraint condition(s) according to the PCB data 2402 in the cost-updated wiring exploration region.

In another embodiment, the third agent A3 may explore an optimal path for wiring the plurality of terminals to the specific positions 2403a and 2403b while satisfying not only the specific constraint condition(s) but also other constraint conditions (e.g., 45-degree angle), based on the result explored by the second agent A2. The third agent A3 may i) calculate wiring probabilities of a plurality of grid cells using information on the grid cells corresponding to the shortest path, ii) generate a heatmap reflecting wiring probability values for each of the plurality of grid cells, using the information on the grid cells corresponding to the shortest path, and iii) perform wiring design according to PCB wiring target information in a continuous coordinate system based on the probability value defined by the heatmap. For example, the third agent A3 may explore an optimal path for wiring the plurality of terminals to the specific positions 2403a and 2403b while satisfying all constraint conditions, by performing wiring of the plurality of terminals in a continuous coordinate system according to PCB target information specified based on the PCB data 2402, using wiring probabilities of the plurality of grid cells.

Finally, the agent server AS may provide a wiring result in the continuous coordinate system to the user terminal 10. More specifically, the agent server AS may integrate wiring exploration (or wiring performing) results of each of the plurality of agents A1, A2, and A3 (S459, see FIG. 4B), and may provide (or transmit) an integrated result (i.e., an optimal solution) as a response to a user input (S461, see FIG. 4B). For example, as illustrated in (b) of FIG. 24 and FIG. 25, the agent server AS may integrate wiring exploration (or wiring performing) results of each of the plurality of agents A1, A2, and A3, and may generate an integrated result 2420.

The generated result 2420 may include an optimal path 2421 that wires the plurality of terminals T1 and T2 to the specific positions 2403a and 2403b, while satisfying all constraint conditions according to a user's input intention. The agent may store the integrated result 2402 in the storage unit 140, and may provide guidance information that guides that the integrated result has been generated (e.g., "Terminals are disposed at coordinates '(10.20...)' and '(30.20...)' corresponding to the displayed points, and an optimal path that satisfies a 45-degree angle while the disposed terminals not conflicting with other terminals has been successfully explored. Please check the result!", 2420a) to the user terminal 10, together with the integrated result 2420 stored in the storage unit 140.

For example, a user may select a graphical object 2422a linked to a function of storing the finally provided result 2420 to store the result 2420, or may select a graphical object 2422b linked to a function of additional inquiry to transmit an additional inquiry or information to the chatbot 2400.

As described above, in the present invention, when a user input that desires an already designed (or wired) design or a new design is received, an intention (or context) of the user input may be understood, and an appropriate agent may be selected, and a customized result according to the user intention may be generated through the selected agent and provided to the user.

As described above, according to the sampling-based wiring method and system of the present invention, by automating the PCB design process using artificial intelligence, it may be possible to minimize the time consumed in the PCB design process, and to enable reduction of human resources and costs incurred in the PCB design process.

In addition, according to the sampling-based wiring method and system of the present invention, an efficient wiring path satisfying various constraint conditions may be derived by exploring the wiring path of the PCB, using artificial intelligence. Through this, in the present invention, the efficiency, accuracy, and quality of PCB wiring design can be improved simultaneously, and a user can reduce the time and cost incurred to design PCB wiring.

Further, according to the sampling-based wiring method and system according to the present invention, by performing PCB automatic wiring satisfying various constraint conditions required for PCB wiring, using artificial intelligence, the productivity and quality of the entire PCB wiring design process may be improved. That is, the present invention may be flexibly applied and used even in a complex PCB wiring design environment.

In addition, according to the sampling-based wiring method and system according to the present invention, by efficiently exploring the PCB wiring path based on a grid, an optimized wiring path satisfying complex constraint conditions can be derived while minimizing wiring conflict (or congestion, interference, etc.).

Further, according to the sampling-based wiring method and system according to the present invention, by using the result explored based on a grid as a guide, an optimal path accurately satisfying various constraint conditions can be explored. Through this, a user can escape from repetitive wiring path adjustment task and maximize the efficiency in the design process.

In addition, according to the sampling-based wiring method and system according to the present invention, by rapidly exploring a shortest path based on a grid and precisely correcting the shortest path explored based on the grid, a complex PCB wiring problem can be solved, and an optimal solution (i.e., an optimal wiring path) satisfying all constraint conditions can be derived.

As such, in the present invention, in order to find an optimal path from a start point (terminal) to a target point (terminal), grid-based exploration is performed, and sampling is performed using the wiring path explored based on the grid as a guide, so that an optimized wiring path can be derived. That is, in the present invention, through a grid and sampling process, processes such as wiring optimization, path exploration, and reflection of constraint conditions may be efficiently and systematically performed. Through this, the present invention may be applied to the design of various electronic devices, and may be efficiently used in the overall industrial field, and can reduce the cost required in the PCB wiring design process, and minimize the design time and human resources.

Meanwhile, the present invention described above may be executed by one or more processes on a computer and implemented as a program that may be stored on a computer-readable medium (or recording medium).

Further, the present invention described above may be implemented as computer-readable code or instructions on a medium in which a program is recorded. That is, the present invention may be provided in the form of a program.

Meanwhile, the computer-readable medium includes all kinds of recording devices for storing data readable by a computer system. Examples of computer-readable media include hard disk drives (HDDs), solid state disks (SSDs), silicon disk drives (SDDs), ROMs, RAMs, CD-ROMs, magnetic tapes, floppy discs, optical data storage devices, and the like.

Further, the computer-readable medium may be a server or cloud storage that includes storage and that the electronic device is accessible through communication. In this case, the computer may download the program according to the present invention from the server or cloud storage, through wired or wireless communication.

A computer program may reach the system 100 through various suitable delivery mechanisms. The delivery mechanism may be, for example, a computer-readable storage medium, a computer program product, a memory device, a recording medium such as a CD-ROM or DVD, or a product that tangibly implements a computer program. The delivery mechanism may be a signal configured to reliably transmit a computer program through air or an electrical connection. The system 100 may propagate or transmit the computer program as a computer data signal.

Further, references to "computer-readable storage medium", "computer program product", "tangibly embodied computer program", etc. or "controller", "computer", "processor", etc., should be understood to also include computers having various architectures such as single/multi-processor architecture, and sequential (Von Neumann)/parallel architecture, as well as specialized circuits such as field-programmable gate array (FPGA), application specific circuit (ASIC), signal processing devices, and other devices. References to a computer program, instructions, codes, etc., should be understood to include software for programmable processors or firmware, such as programmable content of a hardware device, whether it is instructions for a processor, or configuration settings for a fixed-function device, a gate array, or a programmable logic device.

Further, in the present invention, the computer described above is an electronic device equipped with a processor, that is, a central processing unit (CPU), and is not particularly limited to any type.

Meanwhile, it should be appreciated that the detailed description is interpreted as being illustrative in every sense, not restrictive. The scope of the present invention should be determined on the basis of the reasonable interpretation of the appended claims, and all of the modifications within the equivalent scope of the present invention belong to the scope of the present invention.

## Claims

1. A PCB wiring automatic design method in a PCB wiring automatic design system, the system including at least one processor and at least one memory including a computer program code, and the PCB wiring automatic design method performed in cooperation with the computer program code, the memory, and the processor, comprising:
receiving printed circuit board (PCB) data comprising a net list and information on a plurality of terminals;
updating a cost of the wiring exploration region so that a cost of at least some of the wiring exploration region is increased based on a preset constraint condition;
exploring a shortest path for wiring the plurality of terminals according to the net list in the cost-updated wiring exploration region; and
performing wiring of the plurality of terminals based on wiring probability according to the shortest path.

2. The PCB wiring automatic design method of claim 1, wherein in the updating of the cost of the wiring exploration region, the cost of the wiring exploration region is updated so that a cost of at least some of grid cells among a plurality of grid cells gridization-performed based on a preset criterion is increased based on the preset constraint condition.

3. The PCB wiring automatic design method of claim 2, wherein in the exploring of the shortest path, the shortest path for wiring the plurality of terminals according to the net list is explored by exploring grid cells whose cost is minimized in the cost-updated wiring exploration region.

4. The PCB wiring automatic design method of claim 3, wherein the performing of the wiring of the plurality of terminals comprise: calculating wiring probability of the plurality of grid cells by using information on grid cells corresponding to the shortest path among the plurality of grid cells; and performing wiring of the plurality of terminals in a continuous coordinate system by using the wiring probability of the plurality of grid cells.

5. The PCB wiring automatic design method of claim 4, wherein, the calculating of the wiring probabilities of the plurality of grid cells comprises:
calculating wiring probabilities of the grid cells corresponding to the shortest path among the plurality of grid cells to be higher than wiring probabilities of remaining grid cells, so that wiring of the plurality of terminals is performed in the continuous coordinate system centered on the grid cells corresponding to the shortest path.

6. The PCB wiring automatic design method of claim 5, further comprising:
converting the wiring exploration region into a heatmap,
wherein the calculating of the wiring probabilities of the plurality of grid cells comprises:
assigning a probability value to each of the plurality of grid cells included in the wiring exploration region, and
wherein the converting into the heatmap comprises:
generating the heatmap, using the probability values assigned to each of the plurality of grid cells.

7. The PCB wiring automatic design method of claim 6, wherein the performing of wiring of the plurality of terminals in the continuous coordinate system comprises:
performing sampling for points to be included in wiring of the plurality of terminals, centered on a region having a high probability value among the wiring exploration region defined by the heatmap.

8. The PCB wiring automatic design method of claim 7, wherein the performing of wiring of the plurality of terminals in the continuous coordinate system comprises:
constructing a wiring tree centered on points satisfying the constraint condition among points specified through the sampling; and
completing wiring of the plurality of terminals, using the wiring tree.

9. The PCB wiring automatic design method of claim 8, wherein the performing of the sampling comprises:
sampling an arbitrary first point positioned in the region having a high probability value on the heatmap, from a point where a first terminal, among terminals grouped into a first net defined by the net list, is positioned.

10. The PCB wiring automatic design method of claim 9, wherein the performing of wiring of the plurality of terminals in the continuous coordinate system comprises:
specifying a second point spaced apart from the first point by a preset distance, among regions having a high probability value defined by the heatmap, as a wiring candidate point;
determining whether the second point satisfies the constraint condition; and
performing different wiring processes depending on whether the second point satisfies the preset constraint condition.

11. The PCB wiring automatic design method of claim 9, wherein the different wiring processes include:
a first wiring process of allowing the second point to be included in a wiring tree of the first net when the second point satisfies the constraint condition, and sampling a new wiring candidate point spaced apart from the second point by the preset distance; and
a second wiring process of not allowing the second point to be included in the wiring tree of the first net when the second point does not satisfy the constraint condition, and sampling a new wiring candidate point spaced apart from the first point by the preset distance.

12. The PCB wiring automatic design method of claim 11, wherein the performing of wiring of the plurality of terminals in the continuous coordinate system comprises:
setting the first terminal as a start point, and setting a second terminal different from the first terminal as a target point, among terminals grouped into the first net; and
repeatedly performing at least one of the first wiring process or the second wiring process until the wiring tree continuing from the start point to the target point is constructed, centered on the region having a high probability value defined by the heatmap.

13. The PCB wiring automatic design method of claim 11, wherein the performing of wiring of the plurality of terminals in the continuous coordinate system comprises:
switching a direction of a connection path connecting the first point and the second point in at least a portion between the first point and the second point, so that the connection path connecting the first point and the second point satisfies the constraint condition when the second point is included in the wiring tree of the first net.

14. The PCB wiring automatic design method of claim 1, wherein the constraint condition comprises at least one of:
a first constraint condition that prevents wiring of the plurality of terminals according to the net list from crossing each other;
a second constraint condition related to at least one of:
a spacing distance between wirings of respective nets included in the net list, or a line width of the respective nets; or
a third constraint condition related to a wiring forbidden zone in which wiring is restricted in the wiring exploration region, and
wherein the specifying of the grid cell that does not satisfy the constraint condition comprises:
specifying at least one specific grid cell that does not satisfy at least one of the first constraint condition, the second constraint condition, or the third constraint condition among the plurality of grid cells.

15. A PCB wiring automatic design system, comprising:
at least one processor; and
at least one memory including a computer program code,
wherein the memory and the program code cooperate with the processor to:
receive printed circuit board (PCB) data including a net list and information on a plurality of terminals;
update a cost of the wiring exploration region so that a cost of at least some of the wiring exploration region is increased based on a preset constraint condition;
explore a shortest path for wiring the plurality of terminals according to the net list in the cost-updated wiring exploration region; and
perform wiring of the plurality of terminals based on wiring probability according to the shortest path.

16. A program stored in a computer-readable recording medium and executed by one or more processes in an electronic device, the program comprising instructions to process:
receiving printed circuit board (PCB) data including a net list and information on a plurality of terminals;
updating a cost of the wiring exploration region so that a cost of at least some of the wiring exploration region is increased based on a preset constraint condition;
exploring a shortest path for wiring the plurality of terminals according to the net list in the cost-updated wiring exploration region; and
performing wiring of the plurality of terminals based on wiring probability according to the shortest path.

17. A PCB wiring automatic design method in a PCB wiring automatic design system cooperating with an artificial intelligence agent, the system including at least one processor and at least one memory including a computer program code, and the PCB wiring automatic design method performed in cooperation with the computer program code, the memory, and the processor, the PCB wiring automatic design method comprising:
receiving PCB wiring target information in the agent through a conversation of a user via a user terminal as a medium;
specifying grid cells corresponding to a shortest path that satisfies a preset constraint condition among a plurality of grid cells forming a wiring exploration region, based on the target information;
performing a wiring design according to the PCB wiring target information based on calculated probability information, by using information on the grid cells corresponding to the shortest path; and
providing, via the agent, a wiring result to the user terminal.

18. The PCB wiring automatic design method of claim 17, wherein the receiving of the PCB wiring target information comprises:
via the agent,
providing a question related to printed circuit board (PCB) data to the user terminal, so that the PCB data including a net list and information on a plurality of terminals is specified;
specifying the PCB data based on an answer received from the user terminal; and
specifying the target information based on the PCB data.

19. The PCB wiring automatic design method of claim 17, further comprising:
generating, via the agent, a task plan based on the PCB wiring target information,
wherein the agent, according to the task plan, cooperates with at least one of a data parsing unit, a path exploration unit, a heatmap generation unit, a sampling-based path exploration unit, or a solution derivation unit of the system, to perform wiring according to the PCB wiring target information.

20. The PCB wiring automatic design method of claim 19, wherein the agent comprises:
a main agent configured to generate the task plan; and
a plurality of sub-agents, configured to cooperate with the main agent, respectively interoperating with one among the data parsing unit, the path exploration unit, the heatmap generation unit, the sampling-based path exploration unit, and the solution derivation unit,
wherein the main agent, according to the task plan, delivers a task command to at least one of the plurality of sub-agents, and
wherein the at least one sub-agent, according to the task command, performs a wiring design according to the PCB wiring target information.
